Europäisches Patentamt

(19) European Patent Office

Office européen des brevets

(11) EP 0 736 501 B1

(12) FASCICULE DE BREVET EUROPEEN

(45) Date de publication et mention
de la délivrance du brevet:
**08.10.1997 Bulletin 1997/41**

(51) Int. Cl.⁶: **C04B 28/02**, C04B 40/00
// (C04B28/02, 22:06, 22:14)

(21) Numéro de dépôt: **96400680.3**

(22) Date de dépôt: **29.03.1996**

(54) **Procédé de projection de béton ou de mortier**

Beton oder Mörtelspritzverfahren

Process for spraying concrete or mortar

(84) Etats contractants désignés:
**AT BE CH DE DK ES FI FR GB GR IE IT LI LU MC
NL PT SE**

(30) Priorité: **03.04.1995 FR 9503902**

(43) Date de publication de la demande:
**09.10.1996 Bulletin 1996/41**

(73) Titulaires:
• **RHONE-POULENC CHIMIE
92408 Courbevoie Cédex (FR)**
• **BOUYGUES
F-78061 Saint-Quentin en Yvelines Cedex (FR)**

(72) Inventeurs:
• **Bertoncini, André
1066 Epalinges (CH)**
• **Frouin, Laurent
94240 L'Hay Les Roses (FR)**
• **Dugat, Jérôme
78180 Montigny-le-Bretonneux (FR)**
• **Jaquier, Jean-Luc
1677 Prez-vers-Siviriez (CH)**
• **Prat, Evelyne
93500 Pantin (FR)**

(74) Mandataire: **Dubruc, Philippe et al
RHONE-POULENC CHIMIE,
Direction de la Propriété Industrielle,
25, Quai Paul Doumer
92408 Courbevoie Cédex (FR)**

(56) Documents cités:
EP-A- 0 307 066          EP-A- 0 329 509
EP-A- 0 407 262          EP-A- 0 506 421
EP-A- 0 519 155          EP-A- 0 520 862
WO-A-95/09128            GB-A- 2 241 499

EP 0 736 501 B1

## Description

La présente invention concerne un procédé de projection de béton ou de mortier mettant en oeuvre une suspension aqueuse particulière de silice, notamment de silice précipitée, et de composé d'aluminium, en particulier de sulfate d'aluminium ou d'alun.

Elle est également relative à l'utilisation de cette suspension aqueuse en tant qu'additif pour béton ou mortier à projeter.

L'utilisation de procédés de projection de béton ou de mortier pour appliquer une couche de béton ou de mortier projeté sur un support ou surface à bétonner est bien connue.

Il existe ainsi aujourd'hui deux types de procédés de projection de béton ou de mortier, en l'occurrence les procédés de projection par voie sèche et les procédés de projection par voie humide.

Dans les procédés de projection de béton par voie sèche, on prépare tout d'abord un mélange sec comprenant tous les composants anhydres traditionnels d'un béton ou d'un mortier, c'est-à-dire un mélange comprenant du ciment, des granulats (du sable dans le cas d'un mortier ; des granulats plus gros, tels que des graviers et/ou des cailloux, et généralement du sable, dans le cas d'un béton) et éventuellement des additifs sous forme solide ; ce mélange sec (en général, au maximum 2 à 4 % d'humidité) est ensuite transporté généralement à l'aide d'air comprimé, par voie pneumatique, dans un tuyau, vers une buse de projection ; un mouillage avec de l'eau (dite eau de gâchage) est alors effectué au niveau de la buse de projection, le mélange eau + solides (ceux-ci constituent le mélange anhydre initial) devant être homogène ; on ajoute généralement, en amont ou au niveau de la buse de projection, un accélérateur de prise, en poudre ou sous forme liquide ; le mélange obtenu est projeté, à partir de la buse de projection, à l'aide d'air comprimé (air de projection ou air propulseur), sur la surface à bétonner.

L'inconvénient majeur de ce type de procédé de projection de béton ou de mortier est la perte importante par rebond du béton ou du mortier sur le support (ou la surface) à bétonner lors de la phase de projection ; le rebond important du béton ou du mortier constitue un risque pour la sécurité du technicien qui procède à la projection du béton ou du mortier : de plus, comme le rebond n'est pas réutilisé, il augmente la quantité totale requise de produits de départ et accroît la durée de projection nécessaire pour l'obtention d'une épaisseur déterminée de la couche de béton ou de mortier.

Dans les procédés de projection de béton par voie humide, on forme d'abord un mélange comprenant du ciment, des granulats (du sable dans le cas d'un mortier ; des granulats plus gros, tels que des graviers et/ou des cailloux, et généralement du sable, dans le cas du béton) de l'eau (dite eau de gâchage), et éventuellement des additifs (mélange gâché) ; un tel mélange peut ainsi être préparé sur le chantier lui-même ou peut y être livré prêt à l'emploi notamment à partir d'une centrale à béton ; ce mélange est ensuite généralement transporté au moyen d'une pompe (par exemple une pompe à vis, une pompe à piston), dans un tuyau, vers une buse de projection ; on ajoute généralement, en amont ou au niveau de la buse de projection, un accélérateur de prise, notamment sous forme liquide ; le mélange obtenu est projeté, à partir de la buse de projection, à l'aide d'air comprimé (air de projection ou air propulseur), sur le support ou la surface à bétonner.

Ces procédés possèdent, de manière générale, par rapport aux procédés de projection par voie sèche un certain nombre d'avantages : le ciment est habituellement bien mouillé et le béton ou le mortier final est plus homogène ; la formation de poussière diminue.

Cependant, ces procédés par voie humide présentent quelques inconvénients ; ainsi, la densité du béton ou du mortier est réduite du fait de la présence, dans le mélange initial de béton ou de mortier, d'eau excédentaire non consommée lors de l'hydratation, d'où un amoindrissement de l'épaisseur de couche projetée en une passe ; si l'addition de verre soluble dans le mélange initial de béton ou de mortier peut diminuer ce temps de prise, elle nuit en revanche à la résistance mécanique dans le temps du béton ou du mortier une fois projeté.

De plus, les accélérateurs de prise habituellement utilisées dans les procédés de projection par voie sèche ou par voie humide contiennent des composants chimiques très alcalins, comme notamment des hydroxydes alcalins, des carbonates alcalins, des aluminates alcalins, qui présentent, en particulier à concentrations élevées un risque pour la sécurité des personnes ; ils peuvent non seulement causer des brûlures sérieuses de la peau en cas de mauvaise manipulation, mais aussi irriter gravement les yeux du technicien qui procède à la projection du béton ou du mortier. Enfin, ces accélérateurs de prise ont un certain caractère polluant, en ce sens que le rebond, qui n'est pas réutilisé, présente, du fait de leur emploi, une teneur élevée en espèces très alcalines.

La présente invention a notamment pour but de proposer un nouveau procédé de projection de béton ou de mortier qui permet d'éviter les inconvénients sus-mentionnés.

Dans ce but, l'invention propose un procédé de projection mettant en oeuvre un additif spécifique.

En particulier, l'invention réside dans un procédé de projection de béton ou de mortier, dans lequel on utilise une nouvelle suspension aqueuse (ou slurry) contenant, notamment, une silice, de préférence une silice précipitée, suspension qui a une aptitude à former un gel lorsqu'elle est laissée au repos, ce qui évite la sédimentation ou décantation du produit au cours du stockage, assurant ainsi la stabilité de la suspension sur plusieurs semaines ou même plusieurs mois, suspension qui conserve son homogénéité sur une telle période ; le gel formé est en outre totalement réversible

2

sous faible sollicitation : ainsi, il se transforme sous faible cisaillement ou agitation en une suspension homogène, de faible viscosité et donc facilement pompable, en particulier par les dispositifs de projection classiquement employés.

Ainsi, la présente invention a pour objet un procédé de projection de béton ou de mortier, par voie sèche ou, de préférence, par voie humide, pour appliquer sur une surface une couche de béton ou de mortier, caractérisé en ce qu'on ajoute juste avant ou au niveau du moyen de projection une suspension aqueuse (A) possédant un pH inférieur à 4 et une teneur en matière sèche comprise entre 10 et 50 % en poids, et se présentant, après une période de repos de 48 heures, sous la forme d'un gel, ledit gel étant réversible sous faible cisaillement.

Selon un mode de réalisation de l'invention, le procédé est effectué par voie sèche.

De manière générale, on forme alors un mélange à sec de béton ou de mortier, on déplace ledit mélange pour l'introduire dans un moyen de projection, on ajoute audit mélange, de manière séparée ou de manière conjointe, l'eau de gâchage et la suspension aqueuse (A) juste avant ou au niveau du moyen de projection et on projette le mélange résultant à partir du moyen de projection sur la surface (ou le support).

La suspension aqueuse (A) et l'eau de gâchage peuvent être introduites dans le mélange sec de manière séparée, c'est-à-dire par deux moyens différents (par exemple à l'aide de deux pompes différentes). Elles peuvent également être introduites dans le mélange de manière conjointe, c'est-à-dire par le même moyen ; elles sont alors en particulier mélangées entre elles préalablement à leur introduction dans ledit mélange. L'utilisation de la suspension selon l'invention permet de réduire le rebond et de diminuer la formation de poussière.

Il est à noter que la suspension aqueuse (A) peut être employée, notamment, comme eau de gâchage.

Bien que le procédé de projection puisse être réalisé par voie sèche comme décrit précédemment, sa mise en oeuvre par voie humide donne des résultats particulièrement excellents.

Ainsi, selon un mode de réalisation préféré de l'invention, le procédé est effectué par voie humide.

De manière générale, on forme alors un mélange de béton ou de mortier gâché, on déplace ledit mélange pour l'introduire dans un moyen de projection, on ajoute audit mélange gâché la suspension aqueuse (A) juste avant ou au niveau du moyen de projection et on projette le mélange résultant à partir du moyen de projection sur la surface (ou le support).

Dans les deux modes de réalisation de l'invention, les moyens utilisés pour former le mélange à sec ou le mélange gâché, pour déplacer puis introduire ce mélange dans le moyen de projection et pour projeter le mélange sur la surface à bétonner à partir dudit moyen correspondent à ceux habituellement employés dans le domaine de la projection de béton ou de mortier et sont donc bien connus de l'homme du métier.

Ainsi, le mélange sec et le mélange gâché sont en général chacun formés par malaxage des produits entrant dans leur composition ; l'ordre d'introduction desdits produits dans le malaxeur peut être quelconque ; par exemple, dans le cas du procédé de projection par voie humide, les granulats ou agrégats (du sable dans le cas d'un mortier ; des granulats ou agrégats plus gros tels que des graviers et/ou des cailloux, et généralement du sable, dans le cas d'un béton) et le ciment sont d'abord malaxés entre eux, l'eau étant ensuite introduite, le mélange humide ainsi formé étant enfin malaxé.

Des additifs, tels qu'un fluidifiant par exemple, peuvent éventuellement être incorporés à tout moment adéquat lors de la préparation du mélange sec (procédé par voie sèche) ou du mélange gâché (procédé par voie humide). On peut citer, à titre de fluidifiants, notamment la mélamine, le polynaphtalène sulfonate de sodium, le polyacrylate de sodium, le polycarboxylate de sodium.

Il est également possible d'incorporer des fibres de renforcement telles que des fibres d'alcool polyvinylique, de polypropylène, d'acier, de polyacrylonitrile, de cellulose, de carbone, de kevlar®, de polyamide, de polyéthylène, ...

De plus, dans le cas du procédé de projection par voie sèche, le mélange formé à sec est introduit dans le moyen de projection généralement après avoir été transporté à l'aide d'un courant d'air comprimé dans un tuyau (ou conduite) ; dans le cas du procédé par voie humide, le mélange gâché est introduit dans le moyen de projection généralement après avoir été véhiculé à l'aide d'une pompe adéquate, par exemple une pompe à piston ou une pompe à vis, dans un tuyau (ou conduite).

La suspension aqueuse (A) peut être amenée juste avant ou au niveau du moyen de projection par exemple par une pompe doseuse.

Le moyen de projection est habituellement constitué par une buse de projection ; l'ensemble formé à partir du mélange sec, de l'eau de gâchage et de la suspension aqueuse (A), ou l'ensemble formé à partir du mélange gâché et de la suspension aqueuse (A), est alors projeté, à partir de cette buse de projection, généralement à l'aide d'air propulseur qui alimente ladite buse, l'air propulseur étant habituellement de l'air comprimé.

L'emploi d'une suspension aqueuse (A) et son lieu d'introduction dans le mélange sont des caractéristiques essentielles de l'invention.

La suspension aqueuse (A) et ses procédés de préparation vont maintenant être décrits.

La suspension aqueuse (A) est une suspension aqueuse de silice et de composé d'aluminium choisi parmi le sulfate d'aluminium, les sulfates d'aluminium basiques, les aluns et leurs mélanges, possédant un pH inférieur à 4 et une teneur en matière sèche comprise entre 10 et 50 % en poids, et se présentant, après avoir été laissée au repos pendant 48 heures, sous la forme d'un gel, ledit gel étant réversible sous faible cisaillement.

La teneur en matière sèche de la suspension aqueuse (A) est comprise entre 10 et 50 % en poids, de préférence entre 15 et 45 % en poids. Elle est par exemple comprise entre 20 et 40 % en poids.

La suspension aqueuse (A) possède un pH (mesuré selon la norme ISO 787/9 (pH d'une suspension à 5 % dans l'eau)) inférieur à 4, de préférence inférieur à 3,5 et, par exemple, inférieur à 3. Ce pH est en outre généralement d'au moins 2, en particulier d'au moins 2,2.

Ladite suspension possède avantageusement une teneur en silice (exprimée en silice anhydre) comprise entre 1 et 49 % en poids, de préférence entre 3 et 35 % en poids. Cette teneur peut être comprise entre 5 et 30 % en poids, en particulier entre 8 et 20 % en poids.

Elle possède avantageusement une teneur en composé d'aluminium (exprimée en composé d'aluminium anhydre) comprise entre 1 et 49 % en poids, de préférence entre 3 et 40 % en poids. Cette teneur peut être comprise entre 5 et 35 % en poids, en particulier entre 10 et 30 % en poids.

Selon une variante de l'invention, la suspension aqueuse (A) présente une teneur en silice (exprimée en silice anhydre) comprise entre 11 et 20 % en poids et/ou une teneur en composé d'aluminium (exprimée en composé d'aluminium anhydre) comprise entre 21 et 30 % en poids.

Le composé d'aluminium contenu dans la suspension aqueuse (A) est choisi parmi le sulfate d'aluminium, les aluns et leurs mélanges.

Par aluns, on entend des composés du sulfate d'aluminium avec des sulfates alcalins, de formule générale $MAl(SO_4)_2, 12H_2O$ (avec M = Li, Na ou K par exemple). Le radical ammonium ou le thallium monovalent peuvent également former des aluns avec le sulfate d'aluminium.

De manière très avantageuse, le composé d'aluminium est un sulfate d'aluminium.

Ledit sulfate d'aluminium peut être issu d'un sulfate d'aluminium anhydre ($Al_2(SO_4)_3$) ou d'un sulfate d'aluminium hydraté (notamment de formule $Al_2(SO_4)_3, 14H_2O$ ou $Al_2(SO_4)_3, 18H_2O$).

Il peut s'agir d'un sulfate d'aluminium basique choisi, par exemple, parmi ceux de formule :

$$[Al_A(OH)_B(SO_4)_C(H_2O)_E]_n \text{ avec :}$$

n entier positif,
A égal 1,
B compris entre 0,75 et 2,
C compris entre 0,5 et 1,12,
E est compris entre 1,5 et 4 lorsque le sulfate est solide et E supérieur à 4 lorsque le sulfate est sous forme d'une solution aqueuse, et
B + 2C = 3 . Il peut s'agir par exemple des sulfates d'aluminium basiques décrits dans US-A-4.877.597.

Il peut s'agir également d'un sulfate d'aluminium basique choisi, par exemple, parmi ceux de formule :

$$Al_A(OH)_B(SO_4)_C(SiO_X)_D(H_2O)_E \text{ avec :}$$

A égal 1,
B compris entre 0,75 et 2,
C compris entre 0,3 et 1,12,
D compris entre 0,005 et 0,1,
$2 < X \leq 4$
E est compris entre 1,5 et 4 lorsque le sulfate est solide et E supérieur à 4 lorsque le sulfate est sous forme d'une solution aqueuse, et
3 = B + 2C + 2D(X - 2) . Il peut s'agir par exemple des sulfates d'aluminium basiques décrits dans US-A-4.981.675

Si la silice contenue dans la suspension aqueuse (A) peut être notamment choisie parmi les fumées de silice, les silices précipitées, les composés de la silice comprenant majoritairement de la silice choisis parmi les silico-aluminates, par exemple le Tixosil 28 commercialisé par Rhône-Poulenc, les smectites ou les silicates de magnésium type smectite et leurs mélanges, on utilise de manière préférée, à titre de silice, au moins une silice précipitée.

Par silice précipitée, on entend ici une silice obtenue par précipitation à partir de la réaction d'un silicate de métal alcalin avec un acide, en général inorganique, à un pH adéquat du milieu de précipitation, en particulier un pH basique, neutre ou peu acide ; le mode de préparation de la silice peut être quelconque (addition d'acide sur un pied de cuve de silicate, addition simultanée totale ou partielle d'acide ou de silicate sur un pied de cuve d'eau ou de solution de silicate, etc...) et est choisi en fonction du type de silice que l'on souhaite obtenir ; à l'issue de l'étape de précipitation, on procède en général à une étape de séparation de la silice du milieu réactionnel selon tout moyen connu, filtre presse ou filtre sous vide par exemple ; on recueille ainsi un gâteau de filtration, qui est lavé si nécessaire ; ce gâteau peut être, éventuellement après délitage, séché par tout moyen connu, notamment par atomisation, puis éventuellement broyé et/ou aggloméré.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5.12).

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

L'aptitude préférée à la dispersion et à la désagglomération des silices utilisables dans les suspensions aqueuses (A) peut être quantifiée au moyen d'un test spécifique de désagglomération.

Le test de désagglomération est réalisé selon le protocole suivant :

la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm$^2$). La désagglomération est effectuée pendant 420 secondes. On réalise ensuite la mesure granulométrique après avoir introduit dans la cuve de granulomètre un volume (exprimé en ml) connu de la suspension homogénéisée.

La valeur du diamètre médian $\varnothing_{50}$ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de fines, c'est-à-dire du taux de particules inférieures à 0,1 μm qui ne sont pas détectées par le granulomètre. Ce rapport, appelé facteur de désagglomération aux ultra-sons ($F_D$), est d'autant plus élevé que la silice présente une aptitude à la désagglomération élevée.

La silice précipitée contenue, de manière préférée, dans la suspension aqueuse (A) présente généralement une surface spécifique CTAB comprise entre 50 et 250 m$^2$/g, en particulier entre 100 et 240 m$^2$/g.

La suspension aqueuse (A) contient avantageusement une silice précipitée ayant une très bonne aptitude à la dispersion et à la désagglomération.

On peut ainsi employer une silice précipitée telle que décrite dans la demande de brevet européen EP 0520862. En particulier, cette silice précipitée (S$_1$) peut de préférence se présenter sous forme de billes sensiblement sphériques ayant une surface spécifique BET comprise entre 140 et 200 m$^2$/g, une surface spécifique CTAB comprise entre 140 et 200 m$^2$/g, une distribution poreuse telle que le volume poreux constitué par les pores dont le diamètre est compris entre 175 et 275 Å représente au moins 50 %, par exemple au moins 60 %, du volume poreux constitué par les pores de diamètres inférieurs ou égaux à 400 Å (et, de préférence, une taille moyenne d'au moins 80 μm, par exemple d'au moins 100 μm). Ces billes peuvent présenter un facteur de désagglomération aux ultra-sons ($F_D$) supérieur à 5,5 ml et un diamètre médian ($\varnothing_{50}$), après désagglomération aux ultra-sons, inférieur à 5 μm.

On peut également employer comme silice ayant une excellente aptitude à la dispersion et à la désagglomération une silice précipitée, se présentant en général sous forme de poudre, de granulés ou de billes sensiblement sphériques, choisie parmi :

• une silice précipitée (S$_2$) possédant :

   - une surface spécifique CTAB comprise entre 140 et 240 m$^2$/g,
   - un facteur de désagglomération aux ultra-sons ($F_D$) supérieur à 11 ml, par exemple supérieur à 12,5 ml,
   - un diamètre médian ($\varnothing_{50}$), après désagglomération aux ultra-sons, inférieur à 2,5 μm, en particulier inférieur à 2,4 μm, par exemple inférieur à 2,0 μm ;

• un silice précipitée (S$_3$) possédant :

   - une surface spécifique CTAB comprise entre 140 et 240 m$^2$/g,
   - une distribution poreuse telle que le volume poreux constitué par les pores dont le diamètre est compris entre 175 et 275 Å représente moins de 50 %, par exemple moins de 40 %, du volume poreux constitué par les pores de diamètres inférieurs ou égaux à 400 Å,

- un facteur de désagglomération aux ultra-sons ($F_D$) supérieur à 5,5 ml,
- un diamètre médian ($\varnothing_{50}$), après désagglomération aux ultra-sons, inférieur à 5 $\mu$m ;

• une silice précipité ($S_4$) possédant :

- une surface spécifique CTAB comprise entre 100 et 140 m$^2$/g,
- un diamètre médian ($\varnothing_{50}$), après désagglomération aux ultra-sons, inférieur à 2,8 $\mu$m, en particulier inférieur à 2,7 $\mu$m, par exemple inférieur à 2,5 $\mu$m,
- en général, un facteur de désagglomération aux ultra-sons ($F_D$) supérieur à 3,0 ml ;

• une silice précipitée ($S_5$) possédant :

- une surface spécifique CTAB comprise entre 100 et 140 m$^2$/g,
- une distribution poreuse telle que le volume poreux constitué par les pores dont le diamètre est compris entre 175 et 275 Å représente moins de 55 %, en particulier moins de 50 %, par exemple moins de 40 %, du volume poreux constitué par les pores de diamètres inférieurs ou égaux à 400 Å,
- un diamètre médian ($\varnothing_{50}$), après désagglomération aux ultra-sons, inférieur à 4,5 $\mu$m, en particulier inférieur à 4 $\mu$m, par exemple inférieur à 3,8 $\mu$m,
- en général, un facteur de désagglomération aux ultra-sons ($F_D$) supérieur à 3,0 ml.

La silice, en particulier la silice précipitée, contenue dans la suspension aqueuse (A) est en général finement divisée, notamment suite à un broyage (par exemple un broyage humide) ou une désagglomération aux ultra-sons.

Néanmoins, l'utilisation du composé d'aluminium, en particulier de sulfate d'aluminium, permet de stabiliser également des suspensions de silice non finement divisée et ayant, au contraire, une granulométrie élevée, en particulier telle que le $d_{10}$ soit compris entre 4 et 10 $\mu$m, le $d_{50}$ soit compris entre 15 et 30 $\mu$m et le $d_{90}$ soit compris entre 50 et 100 $\mu$m. Le $d_{10}$ représente le diamètre de particules tel que 10 % de la population des particules de silice présentent un diamètre inférieur ; de même, le $d_{50}$ (respectivement le $d_{90}$) représente le diamètre de particules tel que 50 % (respectivement 90 %) de la population des particules de silice présentent un diamètre inférieur. Ces mesures granulométriques sont de préférence effectuées par diffraction laser sur un granulomètre CILAS. Il est à noter que telles suspensions de silice, sans additivation du composé d'aluminium, décantent après moins d'une semaine de stockage et conduisent à la formation d'un dépôt que l'on ne peut redisperser aisément, en particulier sous agitation mécanique.

Une caractéristique essentielle de la suspension aqueuse (A) est son aptitude à former un gel après avoir été laissée au repos : ceci évite les phénomènes de sédimentation ou décantation au cours du stockage, assurant ainsi la stabilité de la suspension sur plusieurs semaines ou même plusieurs mois (notamment au moins trois mois) ; la suspension conserve substantiellement son homogénéité sur une telle période. Ainsi, la suspension aqueuse (A) se présente, après une période de repos de 48 heures, de préférence déjà après une période de repos de 24 heures, voire après une période de repos de 2 heures seulement, sous la forme d'un gel, ce gel étant réversible sous faible cisaillement.

De manière préférée, la suspension aqueuse (A) se présente ainsi, après une période de repos de 24 heures, sous la forme d'un gel qui possède une viscosité ($V_1$), mesurée sous un cisaillement de 1 s$^{-1}$ pendant 1 minute, supérieure à 0,6 Pa.s, de préférence supérieure à 1,5 Pa.s, en particulier supérieure à 2,0 Pa.s (et en général inférieure à 25 Pa.s).

Le mode opératoire pour expliciter le caractère de gel de la suspension aqueuse (A) après une période de repos est le suivant.

On introduit le gel dans une cellule de mesure MS 125 ou MS 145 d'un rhéomètre RHEOMAT Z115 de CONTRAVES ; on effectue un cisaillement de 500 s$^{-1}$ pendant 1 minute (agitation de 500 tr/min) afin de déstructurer le gel ; puis on laisse le gel se reformer pendant 24 heures, en prenant soin de couvrir la cellule d'un film plastique étanche afin de prévenir l'éventuelle déshydratation du gel : à l'issue de ces 24 heures, on peut procéder aux opérations suivantes :

- on effectue une mesure de viscosité ($V_1$) en imposant un cisaillement de 1 s$^{-1}$ pendant 1 minute ; la valeur mesurée est d'autant plus élevée que la tendance de la suspension à gélifier est forte ;
- on peut effectuer ensuite une autre mesure de viscosité ($V_2$) en imposant un cisaillement de 50 s$^{-1}$ pendant 1 minute ; la valeur mesurée est d'autant plus faible que le gel est fragile ; les suspensions aqueuses (A) présentent, en général, une viscosité $V_2$ comprise entre 0,05 et 0,4 Pa.s ;
- on peut effectuer enfin une autre mesure de viscosité ($V_3$) en imposant un cisaillement de 500 s$^{-1}$ pendant 1 minute ; la valeur mesurée est d'autant plus faible que l'aptitude de la suspension à être pompée est élevée ; les suspensions aqueuses (A) présentent, en général, une viscosité $V_3$ comprise entre 0,03 et 0,35 Pa.s.

Le gel sous la forme duquel se présente la suspension aqueuse (A), après une période de repos de 48 heures (de préférence déjà après une période de repos de 24 heures, voire après une période de repos de 2 heures seulement),

EP 0 736 501 B1

est réversible sous faible sollicitation : ainsi, il se transforme sous faible cisaillement en une suspension homogène, de faible viscosité et donc facilement pompable ; plus particulièrement, ledit gel est tel qu'un cisaillement de 500 $s^{-1}$ pendant 1 minute le transforme en une suspension qui présente une viscosité ($V_r$), mesurée sous un cisaillement de 50 $s^{-1}$ pendant 1 minute, d'au plus 0,35 Pa.s, de préférence d'au plus 0,30 Pa.s, par exemple d'au plus 0,25 Pa.s.

Le mode opératoire pour déterminer cette viscosité ($V_r$) est le suivant.

On introduit le gel dans une cellule de mesure MS 125 ou MS 145 d'un RHEOMAT Z115 de CONTRAVES ; on effectue un cisaillement de 500 $s^{-1}$ pendant 1 minute afin de déstructurer le gel ; on effectue alors une mesure de viscosité ($V_r$) du produit obtenu, en imposant un cisaillement de 50 $s^{-1}$ pendant 1 minute.

Il est à noter que les caractéristiques et propriétés des suspensions aqueuses (A) sont obtenues sans l'utilisation d'agents surfactants, qu'ils soient anioniques, cationiques, amphotères ou non-ioniques. Ainsi, de manière préférée, mais non obligatoire, les suspensions aqueuses (A) ne contiennent pas d'agents surfactants.

La suspension aqueuse (A) peut être préparée éventuellement par un procédé comprenant le mélange, sous agitation (agitation mécanique notamment), d'une solution aqueuse du composé d'aluminium, en particulier de sulfate d'aluminium ou d'alun, avec une silice précipitée, telle que décrite plus haut, se présentant sous forme de poudre, de granulés ou de billes sensiblement sphériques, de préférence une silice précipitée $S_1$ à $S_5$.

La suspension aqueuse (A) peut aussi être préparée par un procédé comprenant le mélange, sous agitation, d'une suspension aqueuse (B) de silice avec ledit composé d'aluminium, sous forme de poudre et, éventuellement, de l'eau. Tout type de suspension aqueuse de silice peut être utilisée telle qu'une suspension aqueuse de silice précipitée, une suspension colloïdale de silice appelée communément sol de silice, cette dernière pouvant être obtenue par exemple par filtration de silicate de sodium sur une résine échangeuse d'ion ou une suspension aqueuse d'un composé de la silice comprenant majoritairement de la silice tel que défini plus haut.

En particulier, ce procédé comprend l'addition, sous agitation mécanique, de sulfate d'aluminium, par exemple anhydre ou, de préférence, hydraté, sous forme de poudre et, éventuellement, d'eau, dans une suspension aqueuse (B) de silice précipitée, puis la poursuite de l'agitation du mélange ainsi obtenu.

La suspension aqueuse (A) peut enfin être préparée par un procédé comprenant le mélange, sous agitation, d'une suspension aqueuse (B) de silice et, éventuellement, d'eau, avec une solution dudit composé d'aluminium, cette dernière se trouvant à une température comprise entre 15 et 130 °C. En particulier, ce procédé comprend le mélange, sous agitation mécanique, d'une suspension aqueuse (B) de silice précipitée et, éventuellement, d'eau, avec une solution de sulfate d'aluminium (anhydre ou, de préférence, hydraté) se trouvant à une température comprise entre 15 et 30 °C ou, de manière préférée, entre 95 et 130 °C (notamment du sulfate d'aluminium hydraté fondu à cette température dans son eau de cristallisation), en particulier entre 100 et 120 °C.

Dans les procédés de préparation mettant en oeuvre une suspension aqueuse (B) de silice, celle-ci peut être éventuellement obtenue par mise en suspension dans l'eau, sous agitation (agitation mécanique notamment), d'une silice sous forme solide, en particulier d'une silice précipitée $S_1$ à $S_5$.

Après cette étape de mise en suspension dans l'eau, on peut déliter mécaniquement la suspension obtenue. Le délitage (ou défloculation) mécanique peut s'effectuer dans un déliteur/malaxeur. On réalise en général un délitage chimique conjointement à ce délitage mécanique, en introduisant, dans le déliteur/malaxeur, de l'aluminate de sodium et, de préférence, et en général simultanément, un acide (notamment un acide inorganique tel que l'acide sulfurique), de sorte que le pH de la suspension (B) reste compris entre 6 et 7 et le rapport pondéral Al/$SiO_2$ soit compris entre 1000 et 3300 ppm. On peut éventuellement poursuivre le délitage mécanique une fois réalisée cette addition.

Après l'étape de délitage ou l'étape de mise en suspension dans l'eau (si on ne met pas en oeuvre d'étape de délitage), on peut effectuer un broyage humide ou une désagglomération aux ultra-sons de la suspension obtenue.

Le broyage humide peut être réalisé en faisant passer la suspension dans un broyeur de type moulin colloïdal ou un broyeur à billes.

La désagglomération aux ultra-sons peut être effectuée en soumettant la suspension à des ondes ultrasonores (ultrasonification), au moyen d'une sonde ultra-sons de haute puissance.

Néanmoins, de manière très préférée, la suspension aqueuse (A) est préparée par un procédé mettant en oeuvre une suspension aqueuse (B) de silice précipitée, ayant été obtenue par délitage mécanique (notamment dans un déliteur/malaxeur) d'un gâteau de filtration issu d'une réaction de précipitation de silice, réaction dans laquelle, notamment, on fait agir un silicate de métal alcalin M avec un agent acidifiant.

Le choix de l'agent acidifiant et du silicate se fait d'une manière bien connue en soi.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où cet agent acidifiant est l'acide sulfurique, sa concentration est de préférence comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin M dans lequel M est le sodium ou le potassium.

7

Le silicate de métal alcalin M présente habituellement une concentration (exprimée en $SiO_2$) comprise entre 40 et 330 g/l, par exemple entre 60 et 300 g/l, en particulier entre 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral $SiO_2/Na_2O$ compris entre 2 et 4, plus particulièrement entre 3,0 et 3,7.

Selon un premier mode de réalisation avantageux, le gâteau de filtration est obtenu par un procédé comprenant :

(A) une réaction de précipitation de silice par action d'un silicate de métal alcalin M avec un agent acidifiant, pour laquelle :

(i) on forme un pied de cuve initial comportant au moins une partie de la quantité totale du silicate de métal alcalin M engagé dans la réaction et un électrolyte, la concentration en silicate (exprimée en $SiO_2$) dans ledit pied de cuve initial étant inférieure à 100 g/l et la concentration en électrolyte dans ledit pied de cuve initial étant inférieure à 17 g/l,
(ii) on ajoute l'agent acidifiant audit pied du cuve jusqu'à l'obtention d'une valeur du pH du milieu réactionnel d'au moins environ 7,
(iii) on ajoute au milieu réactionnel de l'agent acidifiant et, le cas échéant, simultanément la quantité de silicate de métal alcalin M,

(B) la filtration du mélange réactionnel, de manière à récupérer un gâteau de filtration ayant une teneur en matière sèche comprise entre 8 et 40 % en poids.

Une concentration faible en silicate et en électrolyte dans le pied de cuve initial sont ici des conditions importantes.

Dans ce mode de réalisation, on opère comme suit.

On forme tout d'abord un pied de cuve qui comprend du silicate ainsi qu'un électrolyte. La quantité de silicate présente dans le pied de cuve peut soit être égale à la quantité totale engagée dans la réaction, soit ne représenter qu'une partie de cette quantité totale.

En ce qui concerne l'électrolyte, ce terme s'entend ici dans son acceptation normale, c'est-à-dire qu'il signifie toute substance ionique ou moléculaire qui, lorsqu'elle est en solution, se décompose ou se dissocie pour former des ions ou des particules chargées.

On utilise en particulier un sel du groupe des sels des métaux alcalins et alcalino-terreux et de préférence le sel du métal M de silicate de départ et de l'agent acidifiant, par exemple le sulfate de sodium dans le cas de la réaction d'un silicate de sodium avec l'acide sulfurique.

Selon une caractéristique essentielle de ce mode de réalisation, la concentration en électrolyte dans le pied de cuve initial est (supérieure à 0 g/l et) inférieure à 17 g/l, de préférence inférieure à 14 g/l.

Selon une autre caractéristique essentielle dudit mode de réalisation, la concentration en silicate dans le pied de cuve initial est (supérieure à O g de $SiO_2$ par litre et) inférieure à 100 g de $SiO_2$ par litre. De préférence, cette concentration est inférieure à 80 g/l, notamment à 70 g/l.

Le deuxième étape consiste à ajouter l'agent acidifiant dans le pied de cuve de composition décrite plus haut.

Cette addition qui entraîne une baisse corrélative du pH du milieu réactionnel se fait jusqu'à ce qu'on atteigne une valeur d'au moins environ 7, généralement comprise entre 7 et 8.

Une fois cette valeur atteinte, et dans le cas d'un pied de cuve de départ ne comprenant qu'une partie de la quantité totale du silicate engagé, on procède alors avantageusement à une addition simultanée d'agent acidifiant et de la quantité restante de silicate.

La réaction de précipitation proprement dite est terminée lorsque l'on a ajouté toute la quantité restante de silicate.

Il est avantageux à la fin de la précipitation et notamment après l'addition simultanée précipitée, d'effectuer un mûrissement du milieu réactionnel, ce mûrissement pouvant par exemple durer de 5 minutes à 1 heure.

Il est enfin possible dans tous les cas (c'est-à-dire aussi bien dans le cas d'un pied de cuve de départ ne comprenant qu'une partie de la quantité totale du silicate engagé que dans le cas d'un pied de cuve de départ comprenant la quantité totale de silicate engagé), après la précipitation, dans une étape ultérieure éventuelle, d'ajouter au milieu réactionnel une quantité supplémentaire d'agent acidifiant. Cette addition se fait généralement jusqu'à l'obtention d'une valeur de pH comprise entre 3 et 6,5, de préférence entre 4 et 6,5.

La température du milieu réactionnel est généralement comprise entre 70 et 98 °C.

Selon une variante, la réaction est effectuée à une température constante comprise entre 80 et 95 °C. Selon une autre variante, la température de fin de réaction est plus élevée que la température de début de réaction : ainsi, on maintient la température au début de la réaction de préférence entre 70 et 95 °C ; puis, on augmente la température en quelques minutes de préférence jusqu'à une valeur comprise entre 80 et 98 °C à laquelle elle est maintenue jusqu'à la fin de la réaction.

On obtient à l'issue des opérations qui viennent d'être décrites un milieu réactionnel formé d'une bouillie de silice.

Le stade (B) de ce premier mode de réalisation avantageux consiste alors en la filtration de cette bouillie de silice, de manière à récupérer un gâteau de filtration ayant une teneur en matière sèche comprise entre 8 et 40 % en poids.

La filtration peut se faire selon toute méthode convenable, par exemple par filtre à bande, filtre rotatif sous vide ou, de préférence, par filtre presse.

Les gâteaux obtenus par filtration presse présentent en général des teneurs en matière sèche assez élevées.

Il est à noter que la silice précipitée $S_1$ mentionnée précédemment dans l'exposé peut être préparée, en séchant par atomisation, de préférence au moyen d'un atomiseur à buses, le gâteau de filtration obtenu (en particulier par filtre presse), ce gâteau devant de plus présenter immédiatement avant son séchage un taux de matière sèche d'au plus 24 % en poids (de préférence d'au plus 23 % en poids) et supérieur à 18 % en poids (de préférence supérieur à 20 % en poids), ledit gâteau pouvant avoir été, avant le séchage, délité mécaniquement et, éventuellement, chimiquement comme indiqué par ailleurs.

Selon un second mode de réalisation avantageux, le gâteau de filtration est obtenu par un procédé comprenant :

(A) une réaction de précipitation de silice par action d'un silicate de métal alcalin M avec un agent acidifiant, pour laquelle :

(i) on forme un pied de cuve initial comportant une partie de la quantité totale du silicate de métal alcalin M engagé dans la réaction, la concentration en silicate (exprimée en $SiO_2$) dans ledit pied de cuve étant inférieure à 20 g/l,
(ii) on ajoute l'agent acidifiant audit pied de cuve initial jusqu'à ce qu'au moins 5 % de la quantité de $M_2O$ présente dans ledit pied de cuve initial soient neutralisés,
(iii) on ajoute au milieu réactionnel simultanément de l'agent acidifiant et la quantité restante de silicate de métal alcalin M telle que le rapport quantité de silicate ajoutée (exprimée en $SiO_2$)/quantité de silicate présente dans le pied de cuve initial (exprimée en $SiO_2$), appelé taux de consolidation, soit supérieur à 4 et d'au plus 100,

(B) la filtration du mélange réactionnel, de manière à récupérer un gâteau de filtration ayant une teneur en matière sèche comprise entre 8 et 40 % en poids.

Une concentration très faible en silicate dans le pied de cuve initial ainsi qu'un taux de consolidation approprié lors de l'étape d'addition simultanée sont ici des conditions importantes.

Dans ce mode de réalisation, on opère comme suit.

On forme tout d'abord un pied de cuve qui comprend du silicate. La quantité de silicate présente dans ce pied de cuve initial ne représente avantageusement qu'une partie de la quantité totale de silicate engagée dans la réaction.

Selon une caractéristique essentielle de ce mode de réalisation, la concentration en silicate dans le pied de cuve initial est (supérieure à 0 g de $SiO_2$ par litre et) inférieure à 20 g de $SiO_2$ par litre.

Cette concentration peut être d'au plus 11 g/l et, éventuellement, d'au plus 8 g/l.

Notamment lorsque la filtration effectuée ultérieurement est réalisée au moyen d'un filtre presse, cette concentration peut être d'au moins 8 g/l, en particulier comprise entre 10 et 15 g/l.

Le pied de cuve initial peut comprendre un électrolyte. Néanmoins, de préférence, aucun électrolyte n'est utilisé au cours de ce mode de réalisation ; en particulier, de manière préférée, le pied de cuve initial ne comprend pas d'électrolyte.

La deuxième étape consiste à ajouter l'agent acidifiant dans le pied de cuve de composition décrite plus haut.

Ainsi, dans cette deuxième étape, on ajoute l'agent acidifiant audit pied de cuve initial jusqu'à ce qu'au moins 5 %, de préférence au moins 50 %, de la quantité de $M_2O$ présente dans ledit pied de cuve initial soient neutralisés.

De manière préférée, dans cette deuxième étape, on ajoute l'agent acidifiant audit pied de cuve initial jusqu'à ce que 50 à 99 % de la quantité de $M_2O$ présente dans ledit pied de cuve initial soient neutralisés.

Une fois qu'est atteinte la valeur souhaitée de quantité de $M_2O$ neutralisé, on procède alors à une addition simultanée (étape (iii)) d'agent acidifiant et d'une quantité de silicate de métal alcalin M telle que le taux de consolidation, c'est-à-dire le rapport quantité de silicate ajoutée (exprimée en $SiO_2$)/quantité de silicate présente dans le pied de cuve initial (exprimée en $SiO_2$), soit supérieur à 4 et d'au plus 100.

Selon une variante, on procède à cette addition simultanée d'agent acidifiant et d'une quantité de silicate de métal alcalin M telle que de taux de consolidation est plus particulièrement compris entre 12 et 100, de préférence entre 12 et 50, notamment entre 13 et 40.

Selon une autre variante, on procède à cette addition simultanée d'agent acidifiant et d'une quantité de silicate de métal alcalin M telle que le taux de consolidation est plutôt supérieur à 4 et inférieur à 12, de préférence compris entre 5 et 11,5, notamment entre 7,5 et 11. Cette variante est, en général, mise en oeuvre quand la concentration en silicate dans le pied de cuve initial est d'au moins 8 g/l, en particulier comprise entre 10 et 15 g/l, par exemple entre 11 et 15 g/l.

De manière préférée, pendant toute l'étape (iii), la quantité d'agent acidifiant ajoutée est telle que 80 à 99 %, par exemple 85 à 97 %, de la quantité de $M_2O$ ajoutée soient neutralisés.

Dans l'étape (iii), il est possible de procéder à l'addition simultanée d'agent acidifiant et de silicate à un premier palier de pH du milieu réactionnel, $pH_1$, puis à un second palier de pH du milieu réactionnel, $pH_2$, tel que $7 < pH_2 < pH_1 < 9$.

La réaction de précipitation proprement dite est terminée lorsque l'on a ajouté toute la quantité restante de silicate.

Il peut être avantageux d'effectuer, notamment après l'addition simultanée précitée, un mûrissement du milieu réactionnel, ce mûrissement pouvant par exemple durer de 1 à 60 minutes, en particulier de 5 à 30 minutes.

Il est enfin souhaitable, après la précipitation, dans une étape ultérieure, notamment avant le mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, de préférence entre 4 et 5,5. Elle permet notamment de neutraliser toute la quantité de $M_2O$ ajoutée lors de l'étape (iii).

L'agent acidifiant lors de cette addition est généralement identique à celui employé lors de l'étape (iii).

La température du milieu réactionnel est habituellement comprise entre 60 et 98 °C.

De préférence, l'addition d'agent acidifiant lors de l'étape (ii) s'effectue dans un pied de cuve initial dont la température est comprise entre 60 et 96 °C.

Selon une variante, la réaction est effectuée à une température constante comprise entre 75 et 96 °C. Selon une autre variante, la température de fin de réaction est plus élevée que la température de début de réaction : ainsi, on maintient la température au début de la réaction de préférence entre 70 et 96 °C, puis on augmente la température en cours de réaction en quelques minutes, de préférence jusqu'à une valeur comprise entre 80 et 98 °C, valeur à laquelle elle est maintenue jusqu'à la fin de la réaction.

On obtient à l'issue des opérations qui viennent d'être décrites un milieu réactionnel formé d'une bouillie de silice.

Le stade (B) de ce second mode de réalisation avantageux consiste alors en la filtration de cette bouillie de silice, de manière à récupérer un gâteau de filtration ayant une teneur en matière sèche comprise entre 8 et 40 % en poids.

Si la filtration peut se faire selon toute méthode convenable (par exemple par filtre presse, filtre à bande ou filtre rotatif sous vide), elle est avantageusement effectuée par filtre presse, par exemple quand la concentration en silicate dans le pied de cuve initial est d'au moins 8 g/l (et inférieure à 20 g/l), en particulier comprise entre 10 et 15 g/l, notamment entre 11 et 15 g/l.

Les gâteaux obtenus par filtration presse présentent en général des teneurs en matière sèche assez élevées.

Il est à noter que les silices précipitées $S_2$ à $S_5$ mentionnées précédemment dans l'exposé peuvent être préparées en séchant par atomisation, de préférence au moyen d'un atomiseur à buses (en général si on souhaite les obtenir sous forme de billes sensiblement sphériques) ou au moyen d'un atomiseur à turbines (en général si on souhaite les obtenir sous forme de poudre), le gâteau obtenu (en général, par filtration presse, si on souhaite les obtenir sous billes sensiblement sphériques, ou, par filtration rotatif sous vide, si on souhaite les obtenir sous forme de poudre) ; ce gâteau peut avoir été, avant le séchage, délité mécaniquement et, éventuellement, chimiquement comme indiqué par ailleurs.

Lorsque le gâteau à sécher présente un taux de matière sèche supérieur à 15 % en poids, le séchage est de préférence effectué au moyen d'un atomiseur à buses ; lorsque ce taux est d'au plus 15 % en poids, le séchage est de préférence effectué au moyen d'un atomiseur à turbines.

Les silices précipitées $S_2$ à $S_5$ peuvent être obtenues sous forme de granulés en soumettant à une opération d'agglomération (notamment la compression directe, la granulation voie humide, l'extrusion ou, de préférence, le compactage à sec) le produit séché (en particulier à partir d'un gâteau ayant un taux de matière sèche d'au plus 15 % en poids).

Les suspensions aqueuses (A) issues des deux modes de réalisation avantageux décrits précédemment présentent, en général, les meilleurs propriétés, en particulier dans l'application projection de béton ou de mortier.

Notamment dans ces deux modes de réalisation avantageux, le gâteau de filtration peut être lavé à l'eau si nécessaire, en particulier pour éliminer des sels de métal alcalin M formés lors de la réaction de précipitation. Par exemple, dans le cas où la précipitation met en jeu du silicate de sodium et de l'acide sulfurique, on peut isoler à l'issue du stade (B) un gâteau présentant une teneur en $Na_2SO_4$ inférieure à 1,5 % en poids.

Il est à noter que l'on peut, éventuellement, effectuer un réempatage du gâteau de filtration pour augmenter son taux de matière sèche à la valeur souhaitée comprise entre 8 et 40 % en poids. Le réempatage consiste à ajouter audit gâteau de la silice sous forme solide (silice pulvérulante) en quantité suffisante ; en particulier cette silice peut être obtenue par séchage, notamment par atomisation, d'une partie du gâteau à enrichir. On peut également obtenir de la silice pulvérulante en effectuant un séchage classique du gâteau après lavage par des solvants organiques.

La suspension aqueuse (A) est donc préférentiellement préparée par un procédé mettant en oeuvre une suspension aqueuse (B) de silice précipitée, cette suspension (B) ayant été obtenue par délitage mécanique d'un gâteau de filtration de silice, de manière avantageuse d'un gâteau de filtration obtenu conformément à l'un des deux modes de réalisation précédemment décrits.

On peut réaliser un délitage chimique conjointement à ce délitage mécanique, en introduisant, par exemple, dans un déliteur/malaxeur, de l'aluminate de sodium et, de préférence, et en général simultanément, un acide (notamment

EP 0 736 501 B1

un acide inorganique tel que l'acide sulfurique), de sorte que le pH de la suspension (B) reste compris entre 6 et 7 et le rapport pondéral Al/SiO$_2$ soit compris entre 1000 et 3300 ppm. On peut éventuellement poursuivre le délitage mécanique une fois réalisée cette addition.

Après l'étape de délitage, on peut effectuer un broyage humide ou une désagglomération aux ultra-sons de la suspension obtenue.

Le broyage humide et la désagglomération aux ultra-sons peuvent être réalisés comme indiqué précédemment dans l'exposé.

Préalablement à la désagglomération aux ultra-sons, la suspension peut-être soumise à une agitation mécanique.

La suspension aqueuse (B) de silice précipitée, notamment préparée à partir d'un gâteau de filtration obtenu conformément à l'un des deux modes de réalisation avantageux décrits ci-avant, et après ledit broyage humide ou ladite désagglomération aux ultra-sons, est, par exemple, telle que sa teneur en matière sèche est comprise entre 10 et 40 % en poids, sa viscosité, mesurée sous un cisaillement de 50 s$^{-1}$ pendant 1 minute, est inférieure à 0,04 Pa.s, en particulier inférieure à 0,02 Pa.s, et la quantité de silice contenue dans le surnageant obtenu après centrifugation de ladite suspension à 7500 tr/min pendant 3 minutes représente plus de 50 % , en particulier plus de 60 %, notamment plus de 70 %, voire plus de 90 %, du poids de la silice contenue dans la suspension (quantité mesurée après séchage, du surnageant à 160 °C jusqu'à obtention d'un poids constant de matière).

Enfin, une autre suspension aqueuse (B) de silice précipitée, utilisable dans des procédés de préparation de la suspension aqueuse (A) et présentant les caractéristiques mentionnées juste ci-dessus, peut, éventuellement, être obtenue par un procédé de transformation du gâteau de filtration synthétisé dans un des deux modes de réalisation avantageux décrits plus haut, procédé par lequel :

(a) on lave ledit gâteau avec un solvant organique et on sèche le gâteau ainsi lavé pour obtenir une silice sous forme pulvérulante,
(b) on met en suspension dans l'eau une quantité de ladite silice sous forme pulvérulante telle que la teneur en matière sèche de la suspension aqueuse (B) de silice précipitée obtenue soit comprise entre 10 et 40 % en poids.

Le lavage aux solvants organiques permet de déplacer l'eau présente dans les pores du gâteau. Les solvants utilisés à cet effet sont de préférence des solvants polaires, notamment l'éthanol et l'éther, qui peuvent être utilisés en mélange.

En particulier, on peut effectuer :

- un premier lavage à l'éthanol,
- un second lavage avec un mélange éthanol/éther 50/50,
- un troisième lavage à l'éther.

Le gâteau ainsi lavé peut être séché, par exemple à l'air ambiant. On obtient une teneur en eau libre tout à fait comparable à celle obtenue avec un séchage par atomisation.

Le présent type de séchage peut permettre d'empêcher l'effondrement de porosité dû à l'action des forces de capillarité lors du séchage.

On obtient ainsi une silice (sous forme pulvérulante) très peu agglomérée, de porosité (mesurée par porosimétrie au mercure) très supérieure à celle obtenue par les techniques de séchage par atomisation.

En général, cette silice conduit, lorsqu'elle est remise en suspension dans l'eau en quantité telle que la teneur en matière sèche de la suspension est comprise entre 10 et 40 % en poids, à des suspensions aqueuses de silice précipitée moins visqueuses que celles obtenues par remise en suspension d'une silice obtenue classiquement par séchage par atomisation.

La présentation sous forme de gel, lorsqu'elle est laissée au repos, de la suspension aqueuse (A) permet de s'affranchir des problèmes de sédimentation ou décantation du produit, assurant ainsi sa stabilité sur plusieurs semaines ou plusieurs mois (3 mois par exemple) ; le gel formé est réversible sous faible cisaillement : il est "cassé" sous faible sollicitation et se transforme alors en une suspension homogène, de faible viscosité et facilement pompable, en particulier par les dispositifs de projection habituellement employés. La mise en oeuvre de cet additif dans le procédé de projection selon l'invention ne nécessite donc pas de dispositif spécifique mais peut, au contraire, être réalisée à l'aide d'un appareillage classique, d'où l'absence de surcoût pour l'utilisateur.

D'autres avantages du procédé selon l'invention, notamment du procédé de projection par voie humide, sont exposés ci-dessous.

Le procédé selon l'invention s'applique sur tout type de surface ou de support. Il trouve une application particulièrement intéressante dans le domaine de la construction des tunnels, mais aussi d'enceintes de fouilles telles que parois berlinoises, murs de soutènement, stabilisation de talus.

L'emploi d'une suspension aqueuse (A) telle que décrite précédemment ne rend plus nécessaire l'utilisation d'accélérateurs de prise, accélérateurs qui présentent généralement un caractère très alcalin. Néanmoins, on ne sort pas du cadre de l'invention si un accélérateur de prise (par exemple sous forme liquide) est utilisé ; celui-ci peut être alors introduit juste avant ou au niveau du moyen de projection, par exemple à l'aide d'une pompe doseuse (généralement différente de celle éventuellement utilisée pour la suspension aqueuse (A)) ; un tel accélérateur n'est alors en général utilisé qu'en une quantité assez faible.

Les conditions d'hygiène et de sécurité, notamment pour le technicien mettant en oeuvre le procédé de projection selon l'invention, sont améliorées du fait du caractère très faiblement irritant de la suspension aqueuse (A), en particulier quand celle-ci contient, à titre de composé l'aluminium, du sulfate d'aluminium.

L'utilisation d'une suspension aqueuse (A) dans le procédé selon l'invention permet en outre une diminution très sensible des pertes à la projection par rebond (donc une meilleure sécurité pour le technicien procédant à la projection du béton ou du mortier) et l'obtention de couches de béton ou de mortier projeté très épaisses : la mise en oeuvre du procédé selon l'invention permet ainsi un gain sensible de productivité.

En effet, l'obtention d'un rebond inférieur à 5 % est possible ; et, l'épaisseur de la couche projetée peut atteindre au moins 30 à 60 cm au niveau des parois verticales et au moins 15 à 20 cm au niveau de la calotte.

Cette diminution des pertes à la projection par rebond et cette augmentation de la couche projetée illustrent une amélioration de l'adhérence (aspect "collant") du béton ou du mortier projeté.

L'invention a ainsi également pour objet l'utilisation, en tant qu'additif pour béton ou mortier à projeter, de la suspension aqueuse (A) telle que décrite précédemment, notamment pour augmenter l'épaisseur de la couche projetée et diminuer le rebond.

De plus, l'emploi de la suspension aqueuse (A) dans le procédé selon l'invention, même généralement quand aucun accélérateur de prise n'est utilisé en plus, ne dégrade pas les propriétés mécaniques à terme du béton ou du mortier projeté ; au contraire, on constate qu'elle conduit à des valeurs de résistance en compression élevées à 28 jours. En général, on obtient 80 % de la résistance en compression d'un béton non accéléré et des valeurs d'au moins 45 MPa pour un béton type CEM I 52.5 (mesures effectuées sur des carottes de béton).

L'obtention de ces bonnes propriétés mécaniques à terme, en association avec les propriétés décrites précédemment, peut permettre notamment de fournir un béton projeté dit de structure pour la réalisation de l'anneau de soutènement des tunnels, la structure obtenue pouvant ainsi constituer une alternative avantageuse et de moindre coût aux structures classiques réalisées en voussoir ou par coulage du béton.

Les avantages précédents sont de préférence obtenus lorsque l'on utilise une quantité de suspension aqueuse (A) telle que la quantité en poids de silice employée (exprimée en silice anhydre) est comprise entre 0,5 et 5 %, en particulier entre 0,5 et 2,5%, par rapport au poids de ciment et/ou la quantité en poids de composé d'aluminium, par exemple de sulfate d'aluminium, employé (exprimée en composé d'aluminium anhydre) est comprise entre 0,2 et 8 %, en particulier entre 0,2 et 3 %, par rapport au poids de ciment.

Dans le cas où la quantité de composé d'aluminium utilisée, notamment de sulfate d'aluminium (exprimée en produit anhydre), est supérieure à 0,5 %, de préférence comprise entre 1,5 et 6 %, en particulier entre 2 et 4 % (par exemple entre 2 et 3 %), par rapport au poids de ciment, on observe de préférence un durcissement rapide de la couche projetée permettant de travailler en toute sécurité, par exemple sous la voûte, dès quelques heures après la projection ; on obtient ainsi des valeurs initiales de résistance à la compression élevées, par exemple d'au moins 2 à 4 MPa à 3 heures, à une température supérieure ou égale à 10 °C (application à l'obtention de béton et mortier dits de structure, notamment pour la réalisation de l'anneau de soutènement des tunnels).

Dans le cas où la quantité de composé d'aluminium utilisée, notamment de sulfate d'aluminium (exprimée en produit anhydre), est d'au plus 0,5 %, par exemple comprise entre 0,2 et 0,45 %, par rapport au poids de ciment, le caractère thixotrope et modelable de la composition projetée est maintenu pendant plus de 0,5 heure (de préférence pendant 2 heures) après la projection (application à l'obtention de béton et mortier talochables).

Ainsi, la cinétique de prise du béton ou du mortier projeté est modulable, notamment en fonction de la quantité de composé d'aluminium employée.

Le rapport pondéral eau/ciment (E/C) de la composition sortant du moyen de projection est en général compris entre 0,45 et 0,60, de préférence entre 0,47 et 0,54 (l'eau d'hydratation des granulats est comprise dans E).

L'invention n'est pas du tout limitée à un type de ciment particulier ; on peut ainsi utiliser tout type de ciment employé traditionnellement dans les procédés de projection de béton ou de mortier, par exemple un ciment de type PORTLAND.

Les exemples suivants illustrent l'invention sans toutefois en limiter la portée.

## EXEMPLE 1

On prépare un gâteau de silice précipitée G1 de la manière suivante.

Dans un réacteur en acier inoxydable muni d'un système d'agitation par hélices et d'un chauffage par double enveloppe, on introduit :

- 346 litres d'eau

- 7,5 kg de $Na_2SO_4$ (électrolyte)
- 587 litres de silicates de sodium aqueux présentant un rapport pondéral $SiO_2/Na_2O$ égal à 3,50 et une densité à 20 °C égale à 1,133.

La concentration en silicate (exprimée en $SiO_2$) dans le pied de cuve est alors de 85 g/l. Le mélange est porté à 79 °C tout en le maintenant sous agitation. On introduit ensuite dans le mélange 386 litres d'acide sulfurique dilué de densité à 20 °C égale à 1,050, jusqu'à obtenir une valeur de pH égale à 8 (mesurée à la température du milieu). La température du milieu réactionnel est de 79 °C pendant les 25 premières minutes, puis elle est portée de 79 °C à 86 °C en 15 mn, et maintenue ensuite à 86 °C jusqu'à la fin de la réaction.

Une fois la valeur du pH égale à 8 atteinte, on introduit conjointement dans le milieu de réaction 82 litres de silicate de sodium aqueux de rapport pondéral $SiO_2/Na_2O$ égal à 3,50 et de densité à 20 °C égale à 1,133 et 131 lites d'acide du type décrit ci-avant, cette introduction simultanée d'acide et de silicate étant réalisée de manière telle que le pH du milieu de réaction soit constamment égal à $8 \pm 0,1$. Après introduction de la totalité du silicate on continue à introduire l'acide dilué pendant 9 mn de façon à amener le pH du milieu réactionnel à une valeur égale à 5,2. On arrête alors l'introduction d'acide et on maintient la bouillie réactionnelle 5 mn supplémentaires sous agitation.

La durée totale de la réaction est de 118 mn.

On obtient une bouillie de silice précipitée qui est filtrée et lavée au moyen d'un filtre-presse de telle sorte que l'on récupère finalement un gâteau G1 de silice dont la perte au feu est de 78 % (donc une teneur en matière sèche de 22 % en poids) et dont la teneur en $Na_2SO_4$ est de 1 % en poids.

## EXEMPLE 2

On introduit dans un déliteur malaxeur CELLIER, 4 kg du gâteau G1 préparé à l'exemple 1 (obtenu par filtration presse et présentant une teneur en matière sèche de 22 % en poids et une teneur en $Na_2SO_4$ de 1 % en poids), préalablement porté à 60 °C.

Puis on introduit simultanément, pendant la défloculation, du gâteau 13,1 ml d'une solution d'aluminate de sodium (ayant une teneur en $Al_2O_3$ de 22 % en poids et une teneur en $Na_2O$ de 18 % en poids (densité : 1,505)) et 7,47 ml d'une solution d'acide sulfurique à 80 g/l (densité : 1,505), de manière à maintenir le pH à une valeur de 6,5.

Le rapport pondéral $Al/SiO_2$ est d'environ 2600 ppm.

On laisse mûrir pendant 20 minutes en poursuivant la défloculation mécanique.

La suspension G2 de silice obtenue est caractérisée par :

- une viscosité de 0,06 Pa.s (mesurée sous un cisaillement de 50 $s^{-1}$ pendant 1 minute) ;
- une granulométrie telle que $d_{10} = 5$ $\mu m$, $d_{50} = 19$ $\mu m$, $d_{90} = 60$ $\mu m$.

Au bout d'une semaine de stockage, on observe :

- la formation, au fond du récipient de stockage, d'un dépôt excessivement difficile, voire impossible, à redisperser ;
- une augmentation de la viscosité de la suspension : sa viscosité est alors de 0,45 Pa.s (mesurée sous un cisaillement de 50 $s^{-1}$ pendant 1 minute).

## EXEMPLE 3

1 kg de la suspension G2 préparée à l'exemple 2 (prélevée après le délitage), présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 220 grammes de sulfate d'aluminium hydraté $Al_2(SO_4)_3$, $14H_2O$ sous forme de poudre, en 3 minutes.

On poursuit l'agitation pendant une quinzaine de minutes.

On obtient une suspension G3 homogène, présentant les caractéristiques suivantes :

| | |
|---|---|
| • pH | 3,25 |
| • teneur en matière sèche (% en poids) | 28,4 |
| • teneur en silice (% en poids) (calculée en silice anhydre) | 18,0 |
| • teneur en sulfate d'aluminium (% en poids) (calculée en sulfate d'aluminium anhydre) | 10,4 |

De plus, après 2 heures de repos, ladite suspension prend en masse et se présente donc sous la forme d'un gel.

Après une semaine de stockage, on transforme le gel, par un cisaillement de 500 s$^{-1}$ pendant 1 minute, en une suspension homogène présentant une viscosité ($V_r$), mesurée sous un cisaillement de 50 s$^{-1}$ pendant 1 minute, de 0,25 Pa.s.

Cette suspension laissée au repos se retransforme en gel au bout de 2 heures.

Après un mois de stockage, on transforme ce gel, sous faible agitation (500 s$^{-1}$ pendant 1 minute), en une suspension présentant sensiblement les mêmes caractéristiques que celle obtenue par "cassage" du gel après une semaine de stockage.

**EXEMPLE 4**

On alimente la chambre d'un broyeur NETZCH LME1 avec 2 litres de suspension G2 préparée à l'exemple 2 (prélevée après le délitage), présentant une teneur en matière sèche de 22 % en poids, à un débit de 0,083 litres/min ; le taux de remplissage de la chambre avec des billes d'alumine (diamètre : 0,6-1 mm) est de 75 % et la vitesse de rotation de l'arbre est de 2000 tr/min.

A l'issue de cette étape de broyage humide, on obtient une suspension G4 caractérisée par :

- une viscosité de 0,016 Pa.s (mesurée sous un cisaillement de 50 s$^{-1}$ pendant 1 minute) ;
- une granulométrie telle que $d_{10}$ = 1,13 $\mu$m, $d_{50}$ = 2,1 $\mu$m, $d_{90}$ = 5,4 $\mu$m ;
- une teneur en matière sèche de 22 % en poids.

**EXEMPLE 5**

1 kg de la suspension G4 préparée à l'exemple 4, présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 440 grammes de sulfate d'aluminium hydraté $Al_2(SO_4)_3$, $14H_2O$ sous forme de poudre, en 3 minutes.

On poursuit l'agitation pendant une quinzaine de minutes.

On obtient une suspension G5 homogène, présentant les caractéristiques suivantes :

| | |
|---|---|
| • pH | 3,05 |
| • teneur en matière sèche (% en poids) | 32,9 |
| • teneur en silice (% en poids) (calculée en silice anhydre) | 15,3 |
| • teneur en sulfate d'aluminium (% en poids) (calculée en sulfate d'aluminium anhydre) | 17,6 |

De plus, après 24 heures de repos, ladite suspension prend en masse et se présente donc sous la forme d'un gel.

Ce gel présente des viscosités $V_1$, $V_2$ et $V_3$ (mesurées selon le protocole indiqué dans la description) respectivement égales à 7,27 Pa.s, 0,20 Pa.s et 0,075 Pa.s.

Après une semaine de stockage, on transforme le gel, par un cisaillement de 500 s$^{-1}$ pendant 1 minute, en une suspension homogène présentant une viscosité ($V_r$), mesurée sous un cisaillement de 50 s$^{-1}$ pendant 1 minute, de 0,11 Pa.s.

Cette suspension laissée au repos se retransforme en gel au bout de 24 heures.

Après un mois de stockage, on transforme ce gel, sous faible agitation (500 s$^{-1}$ pendant 1 minute), en une suspension présentant sensiblement les mêmes caractéristiques que celle obtenue par "cassage" du gel après une semaine de stockage.

**EXEMPLE 6**

1 kg de la suspension G4 préparée à l'exemple 4, présentant une teneur en matière sèche de 22 % en poids, est disposé dans un récipient muni d'un agitateur mécanique RAYNERI disposant d'une pâle.

On y ajoute, sous agitation mécanique (vitesse de rotation de la pâle : 500 tr/min), 100 grammes d'eau et 880 grammes de sulfate d'aluminium hydraté $Al_2(SO_4)_3$, $14H_2O$ sous forme de poudre, en 3 minutes.

On poursuit l'agitation pendant une quinzaine de minutes.

On obtient une suspension G6 homogène, présentant les caractéristiques suivantes :

| • pH | 2,6 |
|---|---|
| • teneur en matière sèche (% en poids) | 36,7 |
| • teneur en silice (% en poids) (calculée en silice anhydre) | 11,1 |
| • teneur en sulfate d'aluminium (% en poids) (calculée en sulfate d'aluminium anhydre) | 25,6 |

De plus, après 24 heures de repos, ladite suspension prend en masse et se présente donc sous la forme d'un gel.

Ce gel présente des viscosités $V_1$, $V_2$ et $V_3$ (mesurées selon le protocole indiqué dans la description) respectivement égales à 2,5 Pa.s, 0,12 Pa.s et 0,10 Pa.s.

Après une semaine de stockage, on transforme le gel, par un cisaillement de 500 s$^{-1}$ pendant 1 minute, en une suspension homogène présentant une viscosité ($V_r$), mesurée sous un cisaillement de 50 s$^{-1}$ pendant 1 minute, de 0,11 Pa.s.

Cette suspension laissée au repos se retransforme en gel au bout de 24 heures.

Après un mois de stockage, on transforme ce gel, sous faible agitation (500 s$^{-1}$ pendant 1 minute), en une suspension présentant sensiblement les mêmes caractéristiques que celle obtenue par "cassage" du gel après une semaine de stockage.

## EXEMPLE 7

1 kg de la suspension G2 préparée à l'exemple 2 (prélevée après le délitage), présentant une teneur en matière sèche de 22 % en poids, et 100 grammes d'eau sont ajoutés à 880 grammes de sulfate d'aluminium hydraté $Al_2(SO_4)_3$, 14$H_2O$ fondu à 110 °C dans son eau de cristallisation.

L'addition est effectuée en une quinzaine de minutes.

On obtient une suspension G7 homogène présentant les caractéristiques suivantes :

| • pH | 2,6 |
|---|---|
| • teneur en matière sèche (% en poids) | 36,7 |
| • teneur en silice (% en poids) (calculée en silice anhydre) | 11,1 |
| • teneur en sulfate d'aluminium (% en poids) (calculée en sulfate d'aluminium anhydre) | 25,6 |

De plus, après 24 heures de repos, ladite suspension prend en masse et se présente donc sous la forme d'un gel.

Ce gel présente des viscosités $V_1$, $V_2$ et $V_3$ (mesurées selon le protocole indiqué dans la description) respectivement égales à 1,8 Pa.s, 0,23 Pa.s et 0,17 Pa.s.

Après une semaine de stockage, on transforme le gel, par un cisaillement de 500 s$^{-1}$ pendant 1 minute, en une suspension homogène présentant une viscosité ($V_r$), mesurée sous un cisaillement de 50 s$^{-1}$ pendant 1 minute, de 0,17 Pa.s.

Cette suspension laissée au repos se retransforme en gel au bout de 24 heures.

Après un mois de stockage, on transforme ce gel, sous faible agitation (500 s$^{-1}$ pendant 1 minute), en une suspension présentant sensiblement les mêmes caractéristiques que celle obtenue par "cassage" du gel après une semaine de stockage.

## EXEMPLE 8

1 kg de la suspension G2 préparée à l'exemple 2 (prélevée après le délitage), présentant une teneur en matière sèche de 22 % en poids, et 240 grammes d'eau sont ajoutés à 1020 grammes de sulfate d'aluminium hydraté $Al_2(SO_4)_3$, 14$H_2O$ fondu à 110 °C dans son eau de cristallisation.

L'addition est effectuée en une quinzaine de minutes.

On obtient une suspension G8 homogène présentant les caractéristiques suivantes :

| • pH | 2,4 |
| • teneur en matière sèche (% en poids) | 35,8 |
| • teneur en silice (% en poids) (calculée en silice anhydre) | 9,8 |
| • teneur en sulfate d'aluminium (% en poids) (calculée en sulfate d'aluminium anhydre) | 26,0 |

De plus, après 24 heures de repos, ladite suspension prend en masse et se présente donc sous la forme d'un gel.

Ce gel présente des viscosités $V_1$, $V_2$ et $V_3$ (mesurées selon le protocole indiqué dans la description) respectivement égales à 1,0 Pa.s, 0,12 Pa.s et 0,09 Pa.s.

Après une semaine de stockage, on transforme le gel, par un cisaillement de 500 s$^{-1}$ pendant 1 minute, en une suspension homogène présentant une viscosité ($V_r$), mesurée sous un cisaillement de 50 s$^{-1}$ pendant 1 minute, de 0,09 Pa.s.

Cette suspension laissée au repos se retransforme en gel au bout de 24 heures.

Après un mois de stockage, on transforme ce gel, sous faible agitation (500 s$^{-1}$ pendant 1 minute), en une suspension présentant sensiblement les mêmes caractéristiques que celle obtenue par "cassage" du gel après une semaine de stockage.

## EXEMPLE 9

Dans une centrale à béton, on prépare un mélange de béton gâché en mélangeant les constituants ci-après selon le processus suivant :

- introduction dans un malaxeur de 1015 kg/m$^3$ de sable 0/4 mm, 175 kg/m$^3$ de graviers 4/8 mm, 785 kg/m$^3$ de granulats 8/16 mm ;
- ajout de 425 kg/m$^3$ de ciment Portland haute résistance (correspondant à la norme européenne CEM I 52,5) ;
- homogénéisation (par malaxage) du mélange sec obtenu pendant 120 secondes ;
- ajout d'une quantité d'eau telle que le rapport E/C du mélange obtenu soit situé entre 0,43 et 0,50 ;
- ajout de 4,25 kg/m$^3$ de fluidifiant (commercialisé par la société SIKA sous le nom de SIKATARD 902) ;
- homogénéisation (par malaxage) du mélange humide obtenu pendant 120 secondes.

On transporte le mélange de béton gâché depuis la centrale à béton vers le chantier dans un camion toupie.

Puis on l'introduit, sur le chantier, dans une machine à projeter SCHWING ; une pompe à piston véhicule ensuite le mélange, dans un tuyau, vers une buse de projection. Cette buse de projection est alimentée en air comprimé (air propulseur).

On introduit dans le mélange gâché, au niveau de la buse de projection, une suspension aqueuse G3, G5, G6, G7 ou G8.

Le débit de la suspension aqueuse est lié au débit du mélange gâché, de manière à obtenir les rapports pondéraux silice (anhydre) /ciment ($R_1$) et sulfate d'aluminium (anhydre)/ciment ($R_2$) mentionnés dans le tableau ci-dessous, qui indique aussi les valeurs de résistance mécanique obtenues à 3 heures (RC (3h)) et à 28 jours (RC (28j)).

| SUSPENSION | R1 (%) | R2 (%) | E/C (à la projection) | RC (3 h) (MPa) | RC (28 j) (MPa) |
|---|---|---|---|---|---|
| G3 | 1,0 | 0,5 | 0,490 | 0,7 | 50,0 |
| G5 | 1,8 | 2,1 | 0,516 | 2,0 | 50,0 |
| G6 | 1,0 | 2,6 | 0,500 | 4,0 | 47,0 |
| G7 | 1,0 | 2,3 | 0,500 | 3,0 | 45,0 |
| G8 | 1,0 | 2,7 | 0,500 | 5,0 | 45,0 |

On obtient ainsi des valeurs de résistance en compression élevées à 28 jours.

De plus, on obtient, dans le cas des suspensions G5, G6, G7 et G8, des valeurs initiales de résistance à la compression élevées (au moins 2 MPa à 3 heures) ; dans le cas de la suspension G3, on constate que le béton projeté est plutôt talochable.

Enfin, pour toutes les projections effectuées, on constate :

- une adhérence forte du béton à la paroi, qui se traduit par un rebond inférieur à 5 % ;
- une épaisseur de couche projetée de 40 cm en paroi verticale et 15 cm en calotte.

## Revendications

1. Procédé de projection de béton ou de mortier pour réaliser sur une surface une couche de béton ou de mortier, caractérisé en ce qu'on ajoute juste avant ou au niveau du moyen de projection une suspension aqueuse (A) de silice et de composé d'aluminium choisi parmi le sulfate d'aluminium, les sulfates d'aluminium basiques, les aluns et leurs mélanges, ladite suspension aqueuse (A) possédant un pH inférieur à 4 et une teneur en matière sèche comprise entre 10 et 50 % en poids, et se présentant, après une période de repos de 48 heures, sous la forme d'un gel, ledit gel étant réversible sous faible cisaillement.

2. Procédé selon la revendication 1, caractérisé en ce que ledit procédé est effectué par voie sèche.

3. Procédé selon la revendication 2, caractérisé en ce qu'on forme un mélange à sec de béton ou de mortier, on déplace ledit mélange pour l'introduire dans un moyen de projection, on ajoute audit mélange l'eau de gâchage et ladite suspension aqueuse (A) juste avant ou au niveau du moyen de projection et on projette le mélange résultant à partir du moyen de projection sur la surface.

4. Procédé selon la revendication 3, caractérisé en ce que le mélange est formé à sec à partir de ciment et de granulats.

5. Procédé selon l'une des revendications 2 à 4, caractérisé en ce que ladite suspension aqueuse (A) et l'eau de gâchage sont mélangées entre elles préalablement à leur addition.

6. Procédé selon l'une des revendications 2 à 4, caractérisé en ce que l'eau de gâchage est constituée par ladite suspension aqueuse (A).

7. Procédé selon la revendication 1, caractérisé en ce que ledit procédé est effectué par voie humide.

8. Procédé selon la revendication 7, caractérisé en ce qu'on forme un mélange de béton ou de mortier gâché, on déplace ledit mélange pour l'introduire dans un moyen de projection, on ajoute au mélange gâché ladite suspension aqueuse (A) juste avant ou au niveau du moyen de projection, et on projette le mélange résultant à partir du moyen de projection sur la surface.

9. Procédé selon la revendication 8, caractérisé en ce que ledit mélange gâché est formé à partir de ciment, de granulats et d'eau.

10. Procédé selon l'une des revendications 1 à 9, caractérisé en ce que l'on n'utilise pas en plus un accélérateur de prise.

11. Procédé selon l'une des revendications 1 à 10, caractérisé en ce que le mélange à sec ou le mélange gâché contient un fluidifiant.

12. Procédé selon l'une des revendications 1 à 11, caractérisé en ce que ladite suspension aqueuse (A) possède un pH inférieur à 3,5.

13. Procédé selon l'une des revendications 1 à 12, caractérisé en ce que ladite suspension aqueuse (A) possède une teneur en silice (exprimée en silice anhydre) comprise entre 1 et 49 % en poids, de préférence entre 3 et 35 % en poids.

14. Procédé selon l'une des revendications 1 à 13, caractérisé en ce que ladite suspension aqueuse (A) possède une teneur en composé d'aluminium (exprimée en composé d'aluminium anhydre) comprise entre 1 et 49 % en poids, de préférence entre 3 et 40 % en poids.

15. Procédé selon l'une des revendications 1 à 14, caractérisé en ce que ledit composé d'aluminium est du sulfate d'aluminium.

16. Procédé selon l'une des revendications 1 à 15, caractérisé en ce que ladite silice est choisie parmi les fumées de silice, les silices précipitées et leurs mélanges.

17. Procédé selon la revendication 16, caractérisé en ce que ladite suspension aqueuse (A) contient, à titre de silice, au moins une silice précipitée.

18. Procédé selon l'une des revendications 1 à 17, caractérisé en ce que ladite suspension aqueuse (A) se présente, après une période de repos de 24 heures, sous la forme d'un gel, ledit gel étant réversible sous faible cisaillement.

19. Procédé selon l'une des revendications 1 à 18, caractérisé en ce que ladite suspension aqueuse (A) se présente, après une période de repos de 2 heures, sous la forme d'un gel, ledit gel étant réversible sous faible cisaillement.

20. Procédé selon l'une des revendications 1 à 19, caractérisé en ce que ladite suspension aqueuse (A) se présente après une période de repos de 24 heures, sous la forme d'un gel qui possède une viscosité ($V_1$), mesurée sous un cisaillement de 1 $s^{-1}$ pendant 1 minute, supérieure à 0,6 Pa.s, de préférence supérieure à 1,5 Pa.s.

21. Procédé selon l'une des revendications 1 à 20, caractérisé en ce que ledit gel est tel qu'un cisaillement de 500 $s^{-1}$ pendant 1 minute le transforme en une suspension qui présente une viscosité ($V_r$), mesurée sous un cisaillement de 50 $s^{-1}$ pendant 1 minute, d'au plus 0,35 Pa.s, en particulier d'au plus 0,30 Pa.s.

22. Procédé selon l'une des revendications 1 à 21, caractérisé en ce que ladite silice est finement divisée.

23. Procédé selon l'une des revendications 1 à 22, caractérisé en ce que ladite suspension aqueuse (A) est préparée par un procédé comprenant le mélange sous agitation, de silice sous forme solide avec une solution aqueuse du composé d'aluminium.

24. Procédé selon l'une des revendications 1 à 22, caractérisé en ce que ladite suspension aqueuse (A) est préparée par un procédé comprenant le mélange sous agitation, d'une suspension aqueuse (B) de silice, avec ledit composé d'aluminium sous forme de poudre et, éventuellement, de l'eau.

25. Procédé selon l'une des revendications 1 à 22, caractérisé en ce que ladite suspension aqueuse (A) est préparée par un procédé comprenant le mélange, sous agitation, d'une suspension aqueuse (B) de silice, et, éventuellement, d'eau, avec une solution dudit composé d'aluminium se trouvant à une température comprise entre 15 et 130 °C.

26. Procédé selon la revendication 25, caractérisé en ce que ladite suspension aqueuse (A) est préparée par un procédé comprenant le mélange, sous agitation mécanique, d'une suspension aqueuse (B) de silice précipitée et, éventuellement, d'eau, avec une solution de sulfate d'aluminium se trouvant à une température comprise entre 95 et 130 °C.

27. Procédé selon l'une des revendications 24 à 26, caractérisé en ce que ladite suspension aqueuse (B) de silice a été obtenue par mise en suspension dans l'eau, sous agitation, d'une silice sous forme solide.

28. Procédé selon la revendication 27, caractérisé en ce que, après l'étape de mise en suspension dans l'eau, on délite mécaniquement la suspension obtenue.

29. Procédé selon la revendication 28, caractérisé en ce que l'on réalise un délitage chimique conjointement au délitage mécanique, en introduisant de l'aluminate de sodium et, de préférence, un acide, de sorte que le pH de la suspension (B) reste compris entre 6 et 7 et le rapport pondéral Al/SiO$_2$ soit compris entre 1000 et 3300 ppm.

30. Procédé selon l'une des revendications 27 à 29, caractérisé en ce que, après l'étape de mise en suspension dans l'eau ou l'étape de délitage, on effectue un broyage humide ou une désagglomération aux ultra-sons de la suspension obtenue.

31. Procédé selon l'une des revendications 24 à 26, caractérisé en ce que ladite suspension aqueuse (B) de silice est une suspension aqueuse (B) de silice précipitée, qui a été obtenue par délitage mécanique d'un gâteau de filtration issu d'une réaction de précipitation de silice.

**32.** Procédé selon la revendication 31, caractérisé en ce que le gâteau de filtration est obtenu par un procédé comprenant :

(A) une réaction de précipitation de silice par action d'un silicate de métal alcalin M avec un agent acidifiant, pour laquelle :

(i) on forme un pied de cuve initial comportant au moins une partie de la quantité totale du silicate de métal alcalin M engagé dans la réaction et un électrolyte, la concentration en silicate (exprimée en $SiO_2$) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel de l'agent acidifiant et, le cas échéant, simultanément la quantité restante de silicate de métal alcalin M,

(B) la filtration du mélange réactionnel, de manière à récupérer un gâteau de filtration ayant une teneur en matière sèche comprise entre 8 et 40 % en poids.

**33.** Procédé selon la revendication 31, caractérisé en ce que le gâteau de filtration est obtenu par un procédé comprenant :

(A) une réaction de précipitation de silice par action d'un silicate de métal alcalin M avec un agent acidifiant, pour laquelle :

(i) on forme un pied de cuve initial comportant une partie de la quantité totale du silicate de métal alcalin M engagé dans la réaction, la concentration en silicate (exprimée en $SiO_2$) dans ledit pied de cuve initial étant inférieure à 20 g/l,
(ii) on ajoute l'agent acidifiant audit pied de cuve initial jusqu'à ce qu'au moins 5 % de la quantité de $M_2O$ présente dans ledit pied de cuve initial soient neutralisés,
(iii) on ajoute au milieu réactionnel simultanément de l'agent acidifiant et la quantité restante de silicate de métal alcalin M telle que le rapport quantité de silicate ajoutée (exprimée en $SiO_2$) / quantité de silicate présente dans le pied de cuve initial (exprimée en $SiO_2$) soit supérieur à 4 et d'au plus 100,

(B) la filtration du mélange réactionnel, de manière à récupérer un gâteau de filtration ayant une teneur en matière sèche comprise entre 8 et 40 % en poids.

**34.** Procédé selon l'une des revendications 32 et 33, caractérisé en ce que la filtration est effectuée au moyen d'un filtre presse.

**35.** Procédé selon l'une des revendications 31 à 34, caractérisé en ce qu'on réalise un délitage chimique conjointement au délitage mécanique, en introduisant de l'aluminate de sodium, et, de préférence un acide, de sorte que le pH de la suspension (B) reste compris entre 6 et 7 et le rapport pondéral Al/$SiO_2$ soit compris entre 1000 et 3300 ppm.

**36.** Procédé selon l'une des revendications 31 à 35, caractérisé en ce que, après l'étape de délitage, on effectue un broyage humide ou une désagglomération aux ultra-sons de la suspension obtenue.

**37.** Procédé selon la revendication 36, caractérisé en ce que ladite suspension aqueuse (B) de silice précipitée, après ledit broyage humide ou ladite désagglomération aux ultra-sons, est telle que sa teneur en matière sèche est comprise entre 10 et 40 % en poids, sa viscosité, mesurée sous un cisaillement de 50 $s^{-1}$ pendant 1 minute, est inférieure à $4.10^{-2}$ Pa.s et la quantité de silice contenue dans le surnageant obtenu après centrifugation de ladite suspension à 7500 tr/min pendant 30 minutes représente plus de 50 % du poids de la silice contenue dans la suspension.

**38.** Procédé selon l'une des revendications 1 à 37, caractérisé en ce qu'on utilise une quantité de suspension aqueuse (A) telle que la quantité en poids de silice employée (exprimée en silice anhydre) est comprise entre 0,5 et 5 %, en particulier entre 0,5 et 2,5 %, par rapport au poids de ciment.

**39.** Procédé selon l'une des revendications 1 à 38, caractérisé en ce qu'on utilise une quantité de suspension aqueuse (A) telle que la quantité en poids de composé d'aluminium employé (exprimée en composé d'aluminium anhydre), par exemple de sulfate d'aluminium employé, est comprise entre 0,2 et 8 %, en particulier entre 0,2 et 3 %, par rapport au poids de ciment.

40. Utilisation, en tant qu'additif pour béton ou mortier à projeter, de la suspension aqueuse (A) telle que définie à l'une revendications 1, 12 à 22, notamment pour augmenter l'épaisseur de la couche projetée et diminuer le rebond.

**Claims**

1. A process for spraying concrete or mortar to form a layer of concrete or mortar on a surface, characterized in that just before or at the spray means, an aqueous suspension (A) of silica and an aluminium compound is added, the aluminium compound being selected from aluminium sulphate, basic aluminium sulphates, alums and mixtures thereof, said aqueous suspension (A) having a pH of less than 4 and a dry matter content which is in the range 10% to 50% by weight, which is in the form of a gel after a rest period of 48 hours, said gel being reversible under low shear.

2. A process according to claim 1, characterized in that said process is a dry mix process.

3. A process according to claim 2, characterized in that a dry mixture of concrete or mortar is formed, then displaced to introduce it to a spray means, mixing water and said aqueous suspension (A) are added to said mixture just before or at the spray means and the resulting mixture is sprayed from the spray means onto the surface.

4. A process according to claim 3, characterized in that the mixture is a dry mix formed from cement and granulates.

5. A process according to any one of claims 2 to 4, characterized in that said aqueous suspension (A) and the mixing water are mixed together prior to their addition.

6. A process according to any one of claims 2 to 4, characterized in that the mixing water is constituted by said aqueous suspension (A).

7. A process according to claim 1, characterized in that said process is a wet process.

8. A process according to claim 7, characterized in that a mixture of concrete or mortar is mixed, said mixture is displaced to introduce it into a projection means, said aqueous suspension (A) is added to the mixed mixture just before or at the spray means, and the resulting mixture is sprayed from the spray means onto the surface.

9. A process according to claim 8, characterized in that said mixture is formed from cement, granulates and water.

10. A process according to any one of claims 1 to 9, characterized in that no additional accelerator is used.

11. A process according to any one of claims 1 to 10, characterized in that the dry mixture or the mixed mixture contains a liquefier.

12. A process according to any one of claims 1 to 11, characterized in that said aqueous suspension (A) has a pH of less than 3.5.

13. A process according to any one of claims 1 to 12, characterized in that said aqueous suspension (A) has a silica content (expressed in terms of the anhydrous silica) which is in the range 1% to 49% by weight, preferably in range 3% to 35% by weight.

14. A process according to any one of claims 1 to 13, characterized in that said aqueous suspension (A) has an aluminium compound content (expressed in terms of the anhydrous aluminium compound) which is in the range 1% to 49% by weight, preferably in the range 3% to 40% by weight.

15. A process according to any one of claims 1 to 14, characterized in that said aluminium compound is aluminium sulphate.

16. A process according to any one of claims 1 to 15, characterized in that said silica is selected from fumed silica, precipitated silica, and mixtures thereof.

**17.** A process according to claim 16, characterized in that the silica in said aqueous suspension (A) is at least one precipitated silica.

**18.** A process according to any one of claims 1 to 17, characterized in that after a rest period of 24 hours, said aqueous suspension (A) is in the form of a gel, said gel being reversible under low shear.

**19.** A process according to any one of claims 1 to 18, characterized in that after a rest period of 2 hours, said aqueous suspension (A) is in the form of a gel, said gel being reversible under low shear.

**20.** A process according to any one of claims 1 to 19, characterized in that after a rest period of 24 hours, said aqueous suspension (A) is in the form of a gel which has a viscosity ($V_1$), measured at a shear rate of 1 $s^{-1}$ for 1 minute, of more than 0.6 Pa. s., preferably more than 1.5 Pa.s..

**21.** A process according to any one of claims 1 to 20, characterized in that said gel is such that a shear rate of 500 $s^{-1}$ for 1 minute transforms it into a suspension with a viscosity ($V_r$), measured at a shear rate of 50 $s^{-1}$ for 1 minute, of at most 0.35 Pa.s., in particular at most 0.30 Pa.s..

**22.** A process according to any one of claims 1 to 21, characterized in that said silica is finely divided.

**23.** A process according to any one of claims 1 to 22, characterized in that said aqueous suspension (A) is prepared by a process comprising mixing, with stirring, solid silica with an aqueous solution of an aluminium compound.

**24.** A process according to any one of claims 1 to 22, characterized in that said aqueous suspension (A) is prepared by a process comprising mixing, with stirring, an aqueous suspension (B) of silica with said aluminium compound in powder form and, optionally, water.

**25.** A process according to any one of claims 1 to 22, characterized in that said aqueous suspension (A) is prepared by a process comprising mixing, with stirring, an aqueous suspension (B) of silica and, optionally, water, with a solution of said aluminium compound at a temperature which is in the range 15°C to 130°C.

**26.** A process according to claim 25, characterized in that said aqueous suspension (A) is prepared by a process comprising mixing, with stirring, an aqueous suspension (B) of precipitated silica and, optionally, water, with a solution of aluminium sulphate which is at a temperature which is in the range 95°C to 130°C.

**27.** A process according to any one of claims 24 to 26, characterized in that said aqueous suspension (B) of silica is obtained by suspending solid silica in water, with stirring.

**28.** A process according to claim 27, characterized in that, after suspending in water, the suspension obtained is mechanically slaked.

**29.** A process according to claim 28, characterized in that chemical slaking is carried out in combination with mechanical slaking by introducing sodium aluminate and, preferably, an acid, such that the pH of suspension (B) remains in the range 6 to 7 and the $Al/SiO_2$ ration is in the range 1000 to 3300 ppm by weight.

**30.** A process according to any one of claims 27 to 29, characterized in that, after suspending in water or after slaking, the suspension obtained is wet ground or ultrasound disaggregated.

**31.** A process according to any one of claims 24 to 26, characterized in that said aqueous suspension (B) of silica is an aqueous suspension (B) of precipitated silica obtained by mechanical slaking of a filter cake from a silica precipitation reaction.

**32.** A process according to claim 31, characterized in that the filter cake is obtained by a process comprising:

(A) precipitating silica by reacting a silicate of an alkali metal M with an acidifying agent, in which:

(i) an initial stock is formed comprising at least a portion of the total quantity of the silicate of alkali metal M used in the reaction and an electrolyte, the silicate concentration (expressed in terms of $SiO_2$) in said initial stock being less than 100 g/l and the concentration of electrolyte in said initial stock being less than 17 g/l;

(ii) the acidifying agent is added to said stock to obtain a pH of at least about 7 in the reaction medium;

(iii) the acidifying agent and, if appropriate, the remaining quantity of the silicate of alkali metal M are simultaneously added to the reaction medium;

(B) filtering the reaction medium, so as to recover a filter cake with a dry matter content which is in the range 8% to 40% by weight.

33. A process according to claim 31, characterized in that the filter cake is obtained by a process comprising:

(A) precipitating silica by the reacting a silicate of an alkali metal M with an acidifying agent, in which:

(i) an initial stock is formed comprising a portion of the total quantity of the silicate of alkali metal M used in the reaction, the silicate concentration (expressed in terms of $SiO_2$) in said initial stock being less than 20 g/l;

(ii) the acidifying agent is added to said initial stock until at least 5% of the quantity of $M_2O$ present in said initial stock is neutralised;

(iii) the acidifying agent and the remaining quantity of the silicate of alkali metal M are simultaneously added to the reaction medium so that the ratio of the quantity of silicate added (in terms of $SiO_2$) / quantity of silicate present in the initial stock (expressed in terms of $SiO_2$) is more than 4 and at most 100;

(B) filtering the reaction medium, so as to recover a filter cake with a dry matter content which is in the range 8% to 40% by weight.

34. A process according to claim 32 or claim 33, characterized in that filtering is carried out using a filter press.

35. A process according to any one of claims 31 to 34, characterized in that chemical slaking is carried out in combination with mechanical slaking by introducing sodium aluminate and, preferably, an acid, such that the pH of suspension (B) remains in the range 6 to 7 and the $Al/SiO_2$ ratio is in the range 1000 to 3300 ppm by weight.

36. A process according to any one of claims 31 to 35, characterized in that, after slaking, the suspension obtained is wet ground or ultrasound disaggregated.

37. A process according to claim 36, characterized in that said aqueous suspension (B) of precipitated silica, after said wet grinding or said ultrasound disaggregation, is such that the dry matter content is in the range 10% to 40% by weight, its viscosity measured at a shear rate of 50 $s^{-1}$ for 1 minute is less than 4 x $10^{-2}$ Pa.s., and the quantity of silica contained in the supernatant liquid obtained after centrifuging said suspension at 7500 rpm for 30 minutes represents more than 50% by weight of the silica contained in the suspension.

38. A process according to any one of claims 1 to 37, characterized in that a quantity of aqueous suspension (A) is used such that the quantity of silica employed (in terms of anhydrous silica) is in the range 0.5% to 5% by weight, in particular in the range 0.5% to 2.5% by weight, with respect to the weight of cement.

39. A process according to any one of claims 1 to 38, characterized in that a quantity of aqueous suspension (A) is used such that the quantity of aluminium compound employed (in terms of anhydrous aluminium compound), for example aluminium sulphate, is in the range 0.2% to 8% by weight, in particular in the range 0.2% to 3% by weight, with respect to the weight of cement.

40. Use, as an additive for sprayed cement or mortar, of the aqueous suspension (A) as defined in any one of claims 1 or 12 to 22, to increase the thickness of the sprayed layer and to reduce rebound.

**Patentansprüche**

1. Beton- oder Mörtelspritzverfahren zur Herstellung einer Beton- oder Mörtelschicht auf einer Oberfläche, dadurch gekennzeichnet, daß man direkt vor oder in der Spritzvorrichtung eine wäßrige Suspension (A) von Siliziumdioxid und einer Aluminiumverbindung, die unter Aluminiumsulfat, den basischen Aluminiumsulfaten, den Alaunen und deren Gemischen ausgewählt ist, hinzufügt, wobei besagte wäßrige Suspension (A) einen pH-Wert kleiner 4 und einen Trockensubstanzgehalt zwischen 10 und 50 Gew.-% besitzt und nach einer Ruhezeit von 48 Stunden in Form eines Gels vorliegt, wobei das Gel unter schwacher Scherung reversibel ist.

2. Verfahren gemäß Anspruch 1, dadurch gekennzeichnet, daß das Verfahren trocken ausgeführt wird.

3. Verfahren gemäß Anspruch 2, dadurch gekennzeichnet, daß man ein trockenes Beton- oder Mörtelgemisch bildet, man das Gemisch umlagert, um es in eine Spritzvorrichtung einzuführen, man dem Gemisch das Wasser zum Anrühren und die wäßrige Suspension (A) direkt vor oder in der Spritzvorrichtung hinzufügt und man das resultierende Gemisch aus der Spritzvorrichtung auf die Oberfläche spritzt.

4. Verfahren gemäß Anspruch 3, dadurch gekennzeichnet, daß das Gemisch trocken aus Zement und Granulaten gebildet wird.

5. Verfahren gemäß einem der Ansprüche 2 bis 4, dadurch gekennzeichnet, daß die wäßrige Suspension (A) und das Wasser zum Anrühren vor ihrer Zugabe miteinander gemischt werden.

6. Verfahren gemäß einem der Ansprüche 2 bis 4, dadurch gekennzeichnet, daß das Wasser zum Anrühren aus der wäßrigen Suspension (A) besteht.

7. Verfahren gemäß Anspruch 1, dadurch gekennzeichnet, daß das Verfahren naß ausgeführt wird.

8. Verfahren gemäß Anspruch 7, dadurch gekennzeichnet, daß man ein angemachtes Beton- oder Mörtelgemisch bildet, man das Gemisch umlagert, um es in eine Spritzvorrichtung einzuführen, man dem angemachten Gemisch die wäßrige Suspension (A) direkt vor oder in der Spritzvorrichtung hinzufügt, und man das resultierende Gemisch aus der Spritzvorrichtung auf die Oberfläche spritzt.

9. Verfahren gemäß Anspruch 8, dadurch gekennzeichnet, daß das angemachte Gemisch aus Zement, Granulaten und Wasser gebildet wird.

10. Verfahren gemäß einem der Ansprüche 1 bis 9, dadurch gekennzeichnet, daß man nicht zusätzlich einen Abbindebeschleuniger verwendet.

11. Verfahren gemäß einem der Ansprüche 1 bis 10, dadurch gekennzeichnet, daß das trockene oder das angemachte Gemisch einen Verflüssiger enthält.

12. Verfahren gemäß einem der Ansprüche 1 bis 11, dadurch gekennzeichnet, daß die wäßrige Suspension (A) einen pH-Wert kleiner 3,5 besitzt.

13. Verfahren gemäß einem der Ansprüche 1 bis 12, dadurch gekennzeichnet, daß die wäßrige Suspension (A) einen Gehalt an Siliziumdioxid (ausgedrückt als wasserfreies Siliziumdioxid) zwischen 1 und 49 Gew.-%, vorzugsweise zwischen 3 und 35 Gew.-% besitzt.

14. Verfahren gemäß einem der Ansprüche 1 bis 13, dadurch gekennzeichnet, daß die wäßrige Suspension (A) einen Gehalt an Aluminiumverbindung (ausgedrückt als wasserfreie Aluminiumverbindung) zwischen 1 und 49 Gew.-%, vorzugsweise zwischen 3 und 40 Gew.-% besitzt.

15. Verfahren gemäß einem der Ansprüche 1 bis 14, dadurch gekennzeichnet, daß die Aluminiumverbindung Aluminiumsulfat ist.

16. Verfahren gemäß einem der Ansprüche 1 bis 15, dadurch gekennzeichnet, daß das Siliziumdioxid unter Pyrolyse-Siliziumdioxid, den ausfällten Siliziumdioxiden und deren Gemischen ausgewählt ist.

17. Verfahren gemäß Anspruch 16, dadurch gekennzeichnet, daß die wäßrige Suspension (A) als Siliziumdioxid wenigstens ein ausgefälltes Siliziumdioxid enthält.

18. Verfahren gemäß einem der Ansprüche 1 bis 17, dadurch gekennzeichnet, daß die wäßrige Suspension (A) nach einer Ruhezeit von 24 Stunden in Form eines Gels vorliegt, wobei das Gel unter leichter Scherung reversibel ist.

19. Verfahren gemäß einem der Ansprüche 1 bis 18, dadurch gekennzeichnet, daß die wäßrige Suspension (A) nach einer Ruhezeit von 2 Stunden in Form eines Gels vorliegt, wobei das Gel unter leichter Scherung reversibel ist.

20. Verfahren gemäß einem der Ansprüche 1 bis 19, dadurch gekennzeichnet, daß die wäßrige Suspension (A) nach einer Ruhezeit von 24 Stunden in Form eines Gels vorliegt, das eine Viskosität ($V_1$), gemessen unter einer Scherung von 1 $s^{-1}$ während 1 Minute, größer als 0,6 Pa • s, vorzugsweise größer als 1,5 Pa • s besitzt.

21. Verfahren gemäß einem der Ansprüche 1 bis 20, dadurch gekennzeichnet, daß das Gel so ist, daß eine Scherung von 500 $s^{-1}$ während 1 Minute es in eine Suspension umwandelt, die eine Viskosität ($V_r$), gemessen unter einer Scherung von 50 $s^{-1}$ während 1 Minute, von höchstens 0,35 Pa • s, insbesondere von höchstens 0,30 Pa • s aufweist.

22. Verfahren gemäß einem der Ansprüche 1 bis 21, dadurch gekennzeichnet, daß das Siliziumdioxid fein zerteilt ist.

23. Verfahren gemäß einem der Ansprüche 1 bis 22, dadurch gekennzeichnet, daß die wäßrige Suspension (A) durch ein Verfahren hergestellt wird, das das Mischen von Siliziumdioxid in fester Form mit einer wäßrigen Lösung der Aluminiumverbindung unter Rühren umfaßt.

24. Verfahren gemäß einem der Ansprüche 1 bis 22, dadurch gekennzeichnet, daß die wäßrige Suspension (A) durch ein Verfahren hergestellt wird, das das Mischen einer wäßrigen Suspension (B) von Siliziumdioxid mit der pulverförmigen Aluminiumverbindung und gegebenenfalls mit Wasser unter Rühren umfaßt.

25. Verfahren gemäß einem der Ansprüche 1 bis 22, dadurch gekennzeichnet, daß die wäßrige Suspension (A) durch ein Verfahren hergestellt wird, das das Mischen einer wäßrigen Suspension (B) von Siliziumdioxid und gegebenenfalls von Wasser mit einer Lösung der Aluminiumverbindung, die sich auf einer Temperatur zwischen 15 und 130 °C befindet, unter Rühren umfaßt.

26. Verfahren gemäß Anspruch 25, dadurch gekennzeichnet, daß die wäßrige Suspension (A) durch ein Verfahren hergestellt wird, das das Mischen einer wäßrigen Suspension (B) von ausgefälltem Siliziumdioxid und gegebenenfalls von Wasser mit einer Lösung von Aluminiumsulfat, die sich auf einer Temperatur zwischen 95 und 130 °C befindet, unter mechanischem Rühren umfaßt.

27. Verfahren gemäß einem der Ansprüche 24 bis 26, dadurch gekennzeichnet, daß die wäßrige Suspension (B) von Siliziumdioxid durch Suspendieren eines festen Siliziumdioxids in Wasser unter Rühren erhalten wurde.

28. Verfahren gemäß Anspruch 27, dadurch gekennzeichnet, daß man nach dem Schritt des Suspendierens in Wasser die erhaltene Suspension mechanisch spaltet.

29. Verfahren gemäß Anspruch 28, dadurch gekennzeichnet, daß man gemeinsam mit dem mechanischen Spalten ein chemisches Spalten durchführt, indem man Natriumaluminat und vorzugsweise eine Säure zugibt, so daß der pH-Wert der Suspension (B) zwischen 6 und 7 bleibt und das Gewichtsverhältnis Al/$SiO_2$ zwischen 1000 und 3300 ppm liegt.

30. Verfahren gemäß einem der Ansprüche 27 bis 29, dadurch gekennzeichnet, daß man nach dem Schritt des Suspendierens in Wasser oder dem Schritt des Spaltens ein nasses Zerkleinern oder ein Desagglomerieren mit Ultraschall der erhaltenen Suspension ausführt.

31. Verfahren gemäß einem der Ansprüche 24 bis 26, dadurch gekennzeichnet, daß die wäßrige Suspension (B) von Siliziumdioxid eine wäßrige Suspension (B) von ausgefälltem Siliziumdioxid ist, die durch mechanisches Spalten eines Filterkuchens, der aus einer Reaktion zur Ausfällung von Siliziumdioxid hervorgegangen ist, erhalten wurde.

32. Verfahren gemäß Anspruch 31, dadurch gekennzeichnet, daß der Filterkuchen durch ein Verfahren erhalten wird, das umfaßt:

(A) eine Reaktion zur Ausfällung von Siliziumdioxid durch Einwirkung eines Silikats eines Alkalimetalls M mit einem Ansäuerungsmittel, für die:

(i) man einen Ausgangsgrundstock bildet, der wenigstens einen Teil der Gesamtmenge des an der Reaktion beteiligten Silikats des Alkalimetalls M und einen Elektrolyten umfaßt, wobei die Konzentration an Silikat (ausgedrückt als $SiO_2$) in dem Ausgangsgrundstock kleiner als 100 g/l ist und die Konzentration an Elektrolyt in dem Ausgangsgrundstock kleiner als 17 g/l ist,
(ii) man dem Grundstock das Ansäuerungsmittel bis zum Erhalt eines pH-Werts des Reaktionsmediums von wenigstens etwa 7 hinzufügt,

(iii) man dem Reaktionsmedium Ansäuerungsmittel und gegebenenfalls gleichzeitig die übriggebliebene Menge an Silikat des Alkalimetalls M hinzufügt,

(B) die Filtration des Reaktionsgemischs, um einen Filterkuchen zu gewinnen, der einen Trockensubstanzgehalt zwischen 8 und 40 Gew.-% besitzt.

33. Verfahren gemäß Anspruch 31, dadurch gekennzeichnet, daß der Filterkuchen durch ein Verfahren erhalten wird, das umfaßt:

(A) eine Reaktion zur Ausfällung von Siliziumdioxid durch Einwirkung eines Silikats eines Alkalimetalls M mit einem Ansäuerungsmittel, für die:

(i) man einen Ausgangsgrundstock bildet, der einen Teil der Gesamtmenge des an der Reaktion beteiligten Silikats des Alkalimetalls M umfaßt, wobei die Konzentration an Silikat (ausgedrückt als $SiO_2$) in dem Ausgangsgrundstock kleiner als 20 g/l ist,
(ii) man dem Ausgangsgrundstock das Ansäuerungsmittel hinzufügt, bis wenigstens 5% der Menge an $M_2O$, die in dem Ausgangsgrundstock vorhanden ist, neutralisiert sind,
(iii) man dem Reaktionsmedium gleichzeitig Ansäuerungsmittel und die übriggebliebene Menge an Silikat des Alkalimetalls M hinzufügt, so daß das Verhältnis Menge an hinzugefügtem Silikat (ausgedrückt als $SiO_2$) / Menge an im Ausgangsgrundstock vorhandenem Silikat (ausgedrückt in $SiO_2$) größer als 4 und höchstens 100 ist,

(B) die Filtration des Reaktionsgemischs, um einen Filterkuchen zu gewinnen, der einen Trockensubstanzgehalt zwischen 8 und 40 Gew.-% besitzt.

34. Verfahren gemäß einem der Ansprüche 32 und 33, dadurch gekennzeichnet, daß die Filtration mittels einer Filterpresse ausgeführt wird.

35. Verfahren gemäß einem der Ansprüche 31 bis 34, dadurch gekennzeichnet, daß man gemeinsam mit dem mechanischen Spalten ein chemisches Spalten durchführt, indem man Natriumaluminat und vorzugsweise eine Säure zugibt, so daß der pH-Wert der Suspension (B) zwischen 6 und 7 bleibt und das Gewichtsverhältnis Al/$SiO_2$ zwischen 1000 und 3300 ppm liegt.

36. Verfahren gemäß einem der Ansprüche 31 bis 35, dadurch gekennzeichnet, daß man nach dem Schritt des Spaltens ein nasses Zerkleinern oder ein Desagglomerieren mit Ultraschall der erhaltenen Suspension ausführt.

37. Verfahren gemäß Anspruch 36, dadurch gekennzeichnet, daß die wäßrige Suspension (B) von ausgefälltem Siliziumdioxid nach dem nassen Zerkleinern oder dem Desagglomerieren mit Ultraschall so ist, daß ihr Trockensubstanzgehalt zwischen 10 und 40 Gew.-% liegt, ihre Viskosität, gemessen unter einer Scherung von 50 $s^{-1}$ während 1 Minute, kleiner als $4 \cdot 10^{-2}$ Pa · s ist und die Menge an Siliziumdioxid, die in dem nach Zentrifugieren der Suspension bei 7500 U/min während 30 Minuten erhaltenen Überstand enthalten ist, mehr als 50% des Gewichts des in der Suspension enthaltenen Siliziumdioxids darstellt.

38. Verfahren gemäß einem der Ansprüche 1 bis 37, dadurch gekennzeichnet, daß man eine solche Menge an wäßriger Suspension (A) verwendet, daß die Gewichtsmenge an verwendetem Siliziumdioxid (ausgedrückt als wasserfreies Siliziumdioxid), bezogen auf das Zementgewicht, zwischen 0,5 und 5%, insbesondere zwischen 0,5 und 2,5% liegt.

39. Verfahren gemäß einem der Ansprüche 1 bis 38, dadurch gekennzeichnet, daß man eine solche Menge an wäßriger Suspension (A) verwendet, daß die Gewichtsmenge an verwendeter Aluminiumverbindung (ausgedrückt als wasserfreie Aluminiumverbindung), beispielsweise an verwendetem Aluminiumsulfat, bezogen auf das Zementgewicht, zwischen 0,2 und 8%, insbesondere zwischen 0,2 und 3% liegt.

40. Verwendung der wäßrigen Suspension (A), wie in einem der Ansprüche 1, 12 bis 22 definiert, als Zusatz für Spritzbeton oder -mörtel, insbesondere um die Dicke der gespritzten Schicht zu erhöhen und das Abprallen zu verringern.